# EUROPEAN PATENT SPECIFICATION

(11) **EP 3 195 526 B1**
(45) Date of publication and mention of the grant of the patent: **06.11.2019**
(21) Application number: 15745634.4
(22) Date of filing: 10.07.2015
(51) Int. Cl.: H04L 12/24, H04L 29/06, H04W 4/50, H04W 4/70

(54) **LAYERED MANAGEMENT SERVER DELEGATION**
DELEGIERUNG VON GESCHICHTETEN VERWALTUNGSSERVERN
DÉLÉGATION DE SERVEUR DE GESTION EN COUCHES

(30) Priority: 10.07.2014 US 201462022972 P
(43) Date of publication of application: 26.07.2017
(73) Proprietor: Convida Wireless, LLC, Wilmington, DE 19809-3727 (US)
(72) Inventor: MLADIN, Catalina, M., Hatboro, PA 19040 (US); WANG, Chonggang, Princeton, NJ 08540 (US); LU, Guang, Thornhill, ON L4J 9B6 (CA); SEED, Dale, N., Allentown, PA 18104 (US); DONG, Lijun, San Diego, CA 92130 (US); FLYNN, William, Robert, IV, Schwenksville, PA 19473 (US); LI, Xu, Plainsboro, NJ 08536 (US); LI, Hongkun, Malvern, PA 19355 (US)
(74) Representative: D Young & Co LLP
(86) International application number: PCT/US2015/039866
(87) International publication number: WO 2016/007813

(56) References cited:
- WO-A1-2013/191515
- US-A1- 2011 295 992
- "OMA Device Management Server Delegation Protocol ; OMA-TS-DM_Server_Delegation_Protocol-V1_3- 20121009-C", OMA-TS-DM_SERVER_DELEGATION_PROTOCOL-V1_3- 20121009-C, OPEN MOBILE ALLIANCE (OMA), 4330 LA JOLLA VILLAGE DR., SUITE 110 SAN DIEGO, CA 92122 ; USA , no. 1.3 9 October 2012 (2012-10-09), pages 1-33, XP064162872, Retrieved from the Internet: URL:ftp/Public_documents/DM/DM-DM13/Perman ent_documents/ [retrieved on 2013-05-14]

## Description

### BACKGROUND

Device management (DM) allows device configurations to be setup, modified, secured and monitored by remotely controlling information stored in the device, even as they are deployed across mobile operators, service providers and enterprises. Especially in the context of Machine to Machine (M2M) communications DM provides operational savings and revenue increases for the Operational Support Systems (OSS)/ Business Support Systems (BSS) providers through solutions geared at remote devices (located on the field or customer premises), huge device populations with a high diversity of device manufacturers, and to a variety of business relationship models and network architectures.

Despite the large variety of use and deployment cases for which device management solutions are being developed, in typical cases DM functionality is designed to be provided by third parties and typical solutions include DM servers and clients which might be manufactured by different entities. The server components are designed to send commands to the managed devices, while the clients have the capability to receive and implement the management commands. The most successful solutions have been standardized in order to insure interoperability between the large number of manageable devices and the corresponding variety of network equipment and architectures.

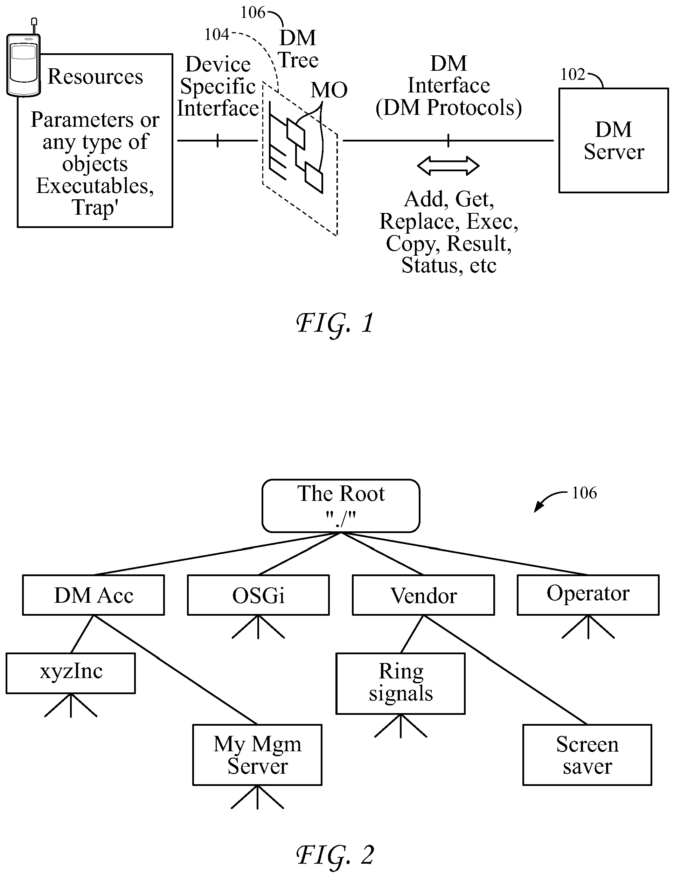

In 2002, the Wireless Application Protocol (WAP) Forum, Wireless Village, The Synchronization Markup Language (SyncML) Initiative, the Location Interoperability Forum, the Mobile Games Interoperability Forum, and the Mobile Wireless Internet Forum together formed the Open Mobile Alliance (OMA) with a focus on developing open standards for mobile devices and promoting interoperability. One of the standards developed by OMA is the DM protocol, a descendant of the SyncML Initiative, based on the architecture depicted in Figure 1.

In OMA, a DM Server 102 sends device management commands to DM Clients running on devices. The commands are logically grouped to address Management Objects (MOs) 104 on the clients and are used to manage specific functions, e.g. performing software updates. The MOs 104 are organized into a hierarchical tree structure called the DM Management Tree 106 as shown in Figure 2.

The Broadband Forum (BBF, formerly known as DSL Forum) manages and publishes a variety of standards, including those for Customer Premises Equipment (CPE) Wide Area Network (WAN) Management Protocol (CWMP) as an application layer protocol for remote management of end-user devices. The bidirectional SOAP/HTTP-based protocol is targeted to Device Management communications between Customer-Premises Equipment (CPE) and Auto Configuration Servers (ACS).

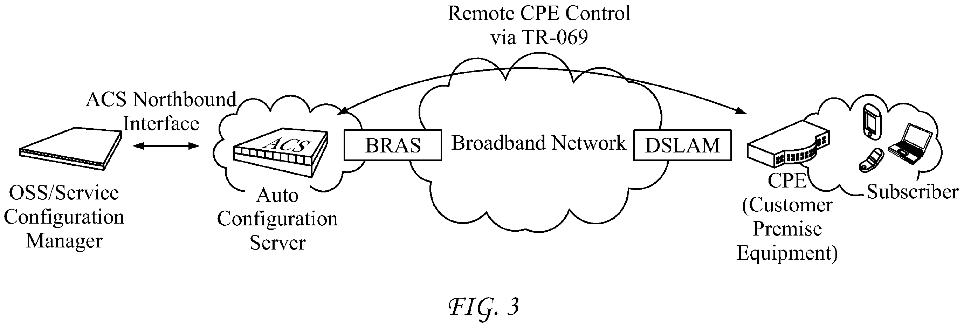

Technical Report 069 of the Broadband Forum was first published in 2004 and has been amended in 2006, 2007, 2010, 2011 and 2013. The guiding principles around BBF's DM /auto-configuration architecture and framework are to configure the CPE with "zero touch", based on a pre-defined service configuration template located in the service provider's network, and to enable a true plug-and-play experience for the customer. TR-069 describes the process and transport protocol used to convey the configuration information from the ACS to the managed CPE devices. ACS stores pre-defined service configuration templates which get pre-validated by the service provider through its service configuration manager before being sent to the client devices. Figure 3 is a diagram that illustrates the end-to-end network architecture to achieve auto-configuration.

Client Authority Delegation is a technique by which the DM servers delegate the authority to manage a specific Device Management client to other DM servers. For example a DM server might incur high loads as it pertains to the number of devices managed or the number of management operations to be performed. While some types of overload can be managed via Layer 4 load balancing techniques, in certain cases the offload of a management operation from one server to another needs to be done in conjunction with a specific operation transferring the authority to perform DM between servers, namely Client Authority Delegation (CAD). Having management authority involves having access to the necessary resources and being allowed to send DM commands or receive DM information from DM clients.

Management Authority (MA) represents the entity that has the right to perform a specific DM function on a Device or manipulate a given data element or parameter. Examples of MAs are: Network Operator, Handset Manufacturer, Enterprise, Device owner, etc. MAs are the custodians of the servers employed for DM purposes. One MA may own all client resources or may share or delegate all or parts of these with/to other MA. As such, when CAD occurs between two servers, the MAs having authority over the DM operations before and after the delegation might be the same or might be different. While CAD might be correctly described as "delegation of management authority" between servers, this paper does not address the security aspects of assigning the MA role or performing access control based on MA role. Rather, the CAD procedures in scope assume either no MA change or are performed between trusted MAs and are preceded by the establishment of secure associations between the servers involved.

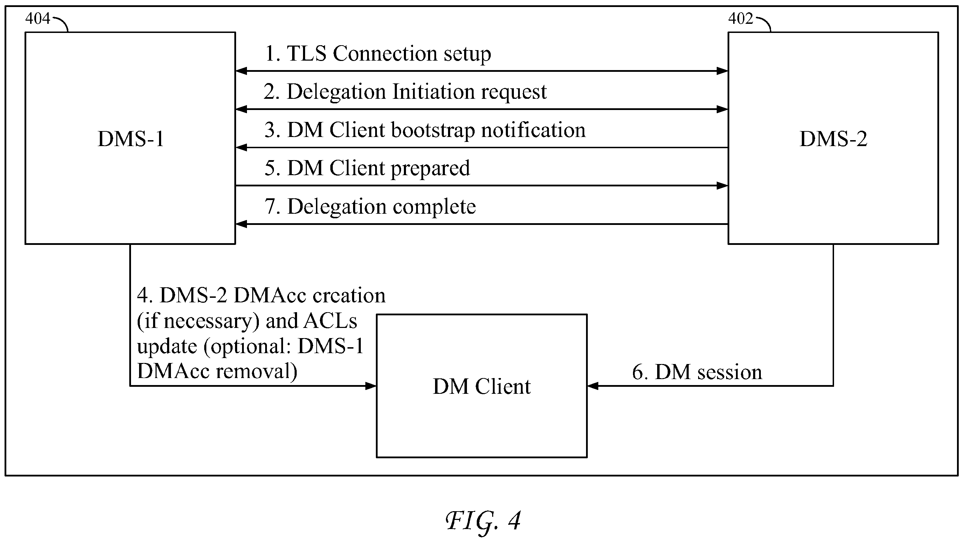

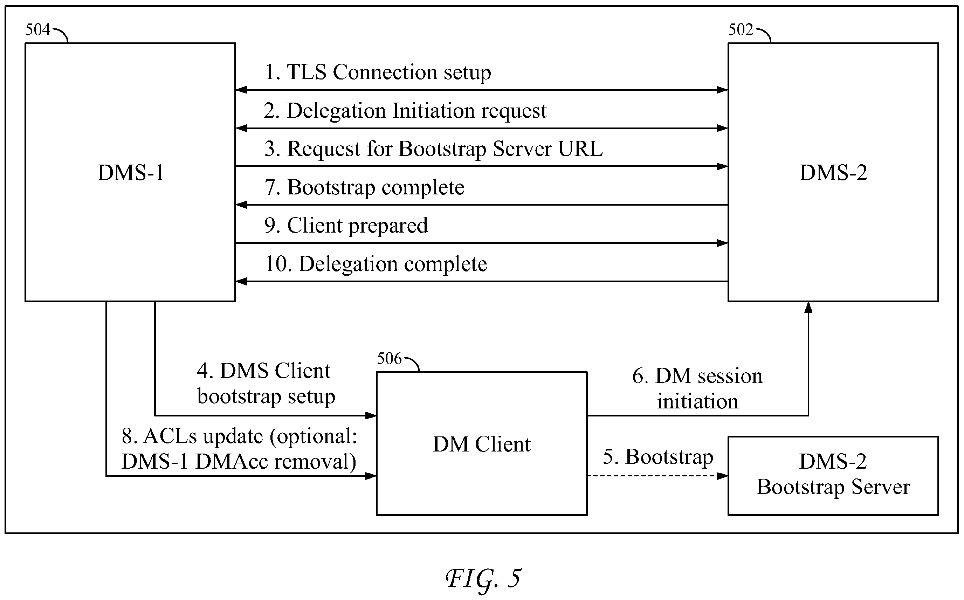

In current DM specifications:
- In BBF TR-069 explicit CAD methods have not been specified.
- In OMA v.1.3 a Device Management Server Delegation Protocol has been specified for this purpose, including the corresponding Client Authority Delegation Procedure. In OMA v.1.3 two main methods for adding account information of the Delegated DMS and configuring the Access Control List (ACL) of the management objects have been treated:
   ∘ Approach 1: (using DMS-2 DMAcc) Figure 4 is a diagram that illustrates OMA-DM v.1.3 DM Server Delegation using DMS-2 DMAcc. The Delegated Server (DMS-2) 402 provides information about its DMAcc (OMA DM Server Account MO) to the delegating Server (DMS-1) 404, adds this information to the DMC, and updates the ACL.
   ∘ Approach 2: (using Bootstrap Server URL) Figure 5 is a diagram that illustrates OMA-DM v.1.3 DM Server Delegation using Bootstrap Server URL. The Delegated Server (DMS-2) 502 provides Bootstrap Server URL to the delegating Server (DMS-1) 504, which forwards it to the DM Client 506. The ACL can be updated by DMS-1 504 only after being notified that the DMC 506 has been successfully bootstrapped.

Requirements for future work in OMA-DM 2.0 include improved mechanisms for multiple management authorities dealing with a single client. In this case, each Server may have authority over specific MOs or be assigned separate areas of the OMA DM tree.

In M2M communications the Service Layer (SL) aims to enable platforms for delivery of third-party value-added services and applications by supporting secure end-to-end data/control exchange between M2M devices and customer applications and to provide capabilities for remote provisioning & activation, authentication, encryption, connectivity setup, buffering, synchronization, aggregation and device management. SL provides interfaces to the underlying networks and enables capabilities using servers owned by Service Providers (SP) accessed through third-party content providers through Application Programming Interfaces (APIs).

In current SL specifications DM functionality can be provided as a SL capability which leverages servers and clients based on DM technologies that are external to the SL. For example, both ETSI TC M2M and oneM2M specifications for Service Layers provide capabilities to interact with OMA-DM or BBF TR-069 -based DM entities, which in turn provide functions and commands needed for DM functionality. The oneM2M architecture allows for the DM functionality to be provided directly by DMG, however it is not yet specified how to be enabled.

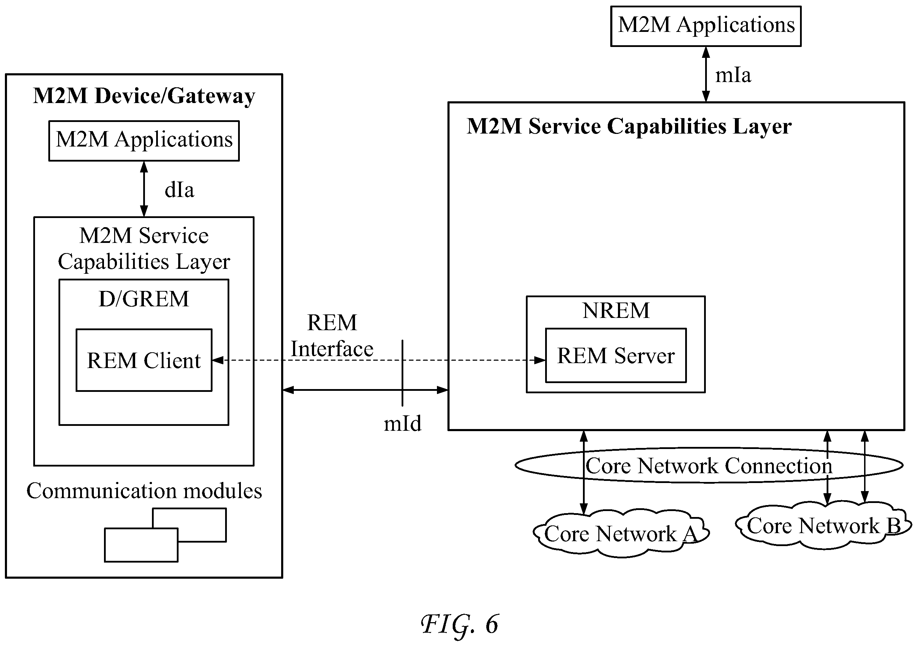

Figure 6 is a diagram that illustrates ETSI Integration of Device Management Enablers for M2M REM Service Capability. The ETSI M2M architecture includes Remote Entity Management (REM) capability, which allows remote configuration of M2M Devices by using already existing DM protocols (e.g. BBF-TR-069, OMA-DM, etc.). REM capabilities at various levels (N/Network, G/Gateway, D/Device) encapsulate the communications with NREM servers and clients which map to OMA-DM or BBF TR-069 server and client entities, respectively.

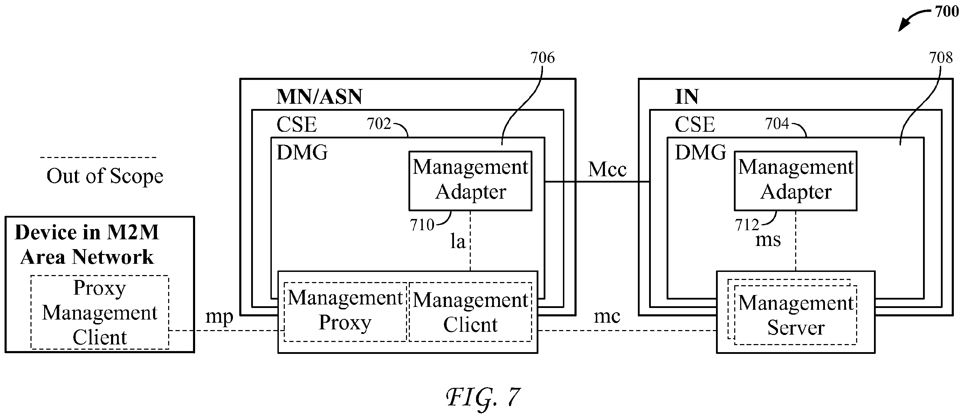

Figure 7 is a diagram that illustrates oneM2M Device Management Architecture. oneM2M defines Common Service Entities (CSEs) with a variety of Common Service Functions (CSFs) among which is the Device Management (DMG) Function. DMG is enabled in CSEs and uses Management Adapter (MAdpt) functions to interface to OMA-DM or BBF TR-069 server and client entities

The "ms", "mc" and "la" interfaces are DM Technology dependent and conform to the respective specifications (e.g., OMA DM, BBF TR069 or OMA LWM2M).

The "ms" interface is used by DMG CSF in the Infrastructure Node, through the translation capabilities of its Management Adapter, to communicate with the corresponding DMS. Similarly the Management Adapter in the Middle Node or the Device is used by the Client DMG to communicate with the DMC using the "la" interface (e.g., DM-7, 8, 9 ClientAPI in OMA DM). The interface between DMS and DMC is the "mc" interface subject to the DM Technology employed.

At the Service Layer level, neither ETSI nor oneM2M have yet addressed specific CAD methods within the Service Layer domain. However, requirements and related technical reports specify that changes of the managed entities by the Management Serves (e.g. OMA-DM, BBF TR-069) should be reported and coordinated with the oneM2M DMGs.

US 2011/0295992 A1 discloses a method for providing a Device Management service in an M2M environment that enables intelligent data collection and communication through an M2M communication function.

With the foregoing as background information, the present application discloses a new method and system for layered management server delegation.

### SUMMARY

The present invention is defined by the appended claims.

Embodiments describe Client Authority Delegation (CAD)procedures for transfer of responsibility to manage devices between DM servers.

Authority to manage a client can be transferred between device management servers in the service layer and in a management layer. These device management servers can include legacy device management servers in the management layer and DMGs in the service layer. Device management servers at the service and management layer can also be synchronized.

Embodiments can include transferring authority to manage a client between a first type of device management server in the service layer and a second type of device management server in the management layer and/or transferring authority to manage a client between a first type of device management server in the service layer and another of the first type of device management server in the service layer.

Embodiments also include transferring authority to manage a client between a second type of device management servers in the management layer and another of the second type of device management server in the management layer, and sending a message to one of a first type of device management servers in the service layer indicating the transfer of authority.

The Service Layer can delegate the authority/responsibility to manage clients between DM servers in the service layer, such as DMGs, when it provides DM services without a Management Layer. The Service Layer can provide a de facto delegation service to the Management Layer (which can be based on dedicated DM Technologies e.g. OMA or BBF) when ML methods are not available (e.g. no inter-DMS direct interface exists, or inter DMS delegation methods are not specified). The Service Layer can transfer the authority/responsibility to manage clients between DMSs in the Management Layer when it provides DM services through a Management Layer. The Service Layer can coordinate this procedure or, when the delegation procedure is performed in the Management Layer, it can be informed and synchronized with the Management Layer procedure. The authority/responsibility to manage clients can be transferred between DMSs in the Management Layer and DM servers, such as DMGs, in the Service Layer. The Service Layer and the Management Layer can be synchronized when delegation procedures occur in deployments using both layers, and to have an accurate accounting and status of the devices being managed by each entity. Both the Service and Management Layers can provide the delegation capabilities to applications and APIs e.g. DM services administration, OSS/BSS configuration, owner and user DM APIs, etc. Both the Service and Management Layers can optimize execution of DM procedures when client management responsibility is transferred from one DM server to another, by providing capabilities to forward management object information for the client, between the DM servers. Another optimization is for the device or client to change of registration which might need to occur for the purpose of the management authority transfer. The Service Layer can provide optimizations for the device or client change of registration which needs to occur for the purpose of the management authority transfer.

Both the Service and Management Layers can provide dynamic delegation capabilities in order to optimize the use of servers in the system, based on Information/status of local server resources: e.g. number of devices managed, CPU load or available memory, etc. for purposes such as load balancing, etc.; Global information about resources available: e.g. other available DM servers just added to the system or under-loaded, with specific capabilities or serving a specific location or available to specific MAs; DM topology, Service Capabilities of the DM servers in the system, etc.; Information about clients managed by the server: e.g. type/model/manufacturer of managed clients , their location, service capabilities, device sleep schedule, etc. ; Global information about DM clients in the system: e.g. topology of DM client groups based on device characteristics, location, etc., service capabilities associated with all the managed devices, etc.; and Local or global DM policies

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

Figure 1 is a diagram that illustrates an OMA DM Protocol Architecture.
Figure 2 is a diagram that illustrates an OMA DM Management Tree.
Figure 3 is a diagram that illustrates the TR-069 or BBF end-to-end network architecture to achieve auto-configuration.
Figure 4 is a diagram that illustrates OMA-DM v.1.3 DM Server Delegation using DMS-2 DMAcc.
Figure 5 is a diagram that illustrates OMA-DM v.1.3 DM Server Delegation using Bootstrap Server URL.
Figure 6 is a diagram that illustrates ETSI Integration of Device Management Enablers for M2M REM Service Capability.
Figure 7 is a diagram that illustrates oneM2M Device Management Architecture.
Figure 8 is a diagram of a one embodiment of a Generic Architecture for device management by Service Layer via Management Layer in one embodiment.
Figure 9 is a diagram that illustrates one embodiment of Deployment Type A: device management directly by SL (DMG), without ML (DMS).
Figure 10 is a diagram that illustrates one embodiment of Deployment Type B: device management by SL (DMG) via ML (DMS), without ML methods.
Figure 11 is a diagram that illustrates one embodiment of Deployment Type C: device management by SL (DMG) via ML (DMS), with ML methods.
Figure 12 is a diagram that illustrates one embodiment of Deployment Type D: device management transfer from ML (DMS) to SL (DMG).
Figure 13 is a diagram that illustrates one embodiment of Deployment Type E: device management by ML (DMS), without SL.
Figure 14 is a diagram that illustrates one embodiment of Deployment Type A when no DMG-DMG client authority delegation method is defined.
Figure 15A is a diagram that illustrates one embodiment of Deployment Type B when no inter-DMS delegation methods exist, where multiple DMSs connect to a Single DMG.
Figure 15B is a diagram that illustrates one embodiment of Deployment Type B when no inter-DMS delegation methods exist, where DMSs connected to Different DMGs.
Figure 16 is a diagram that illustrates one embodiment of Deployment Type C when dedicated DM technologies delegation methods are transparent to the SL.
Figure 17 is a legend for the flow diagrams of Figures 18-35.
Figure 18 is a flow diagram of one embodiment of client authority delegation between two DMGs.
Figure 19A is a flow diagram of one embodiment of delegation information exchanges with request/indication.
Figure 19B is a flow diagram of one embodiment of delegation information exchanges with indication only flows
Figure 20A is a flow diagram of one embodiment of a SL delegation request/response flow initiated by DMG-1.
Figure 20B is a flow diagram of one embodiment of a SL delegation request/response flow initiated by DMG-2.
Figure 21 is a flow diagram of one embodiment of a SL delegation preparation with account information setup option.
Figure 22 is a flow diagram of one embodiment of a SL delegation preparation with bootstrap server URL option.
Figure 23 is a flow diagram of one embodiment of a DM Session initiation in SL.
Figure 24 is a flow diagram of one embodiment of a DM client preparation completion for the bootstrap server URL option.
Figure 25 is a flow diagram of one embodiment of a delegation completion.
Figure 26 is a flow diagram of one embodiment that illustrates the flow in which the two DMSs are connected to the separate DMGs in the SL.
Figure 27 is a flow diagram of one embodiment that illustrates the flow in which the two DMSs are connected to the same DMG in SL with secondary role for both DMS-1 and DMS-2.
Figure 28 is a flow diagram of one embodiment that illustrates the flow in which each DMS is connected to a different DMG in SL with secondary role.
Figure 29 is a flow diagram of one embodiment that illustrates the flow in which two DMSs are connected to the same DMG in the Service Layer with a secondary role for both DMS-1 and DMS-2.
Figure 30 is a flow diagram of one embodiment that illustrates the flow in which each of two DMSs is connected to separate DMGs in the SL.
Figure 31 is a flow diagram of one embodiment that illustrates client authority delegation for Deployments Type D with inter-layer delegation.
Figure 32 is a flow diagram of one embodiment that illustrates OMA DM v.1.3 Client Authority Delegation (DMS-2 DMAcc approach) enhanced with additional parameters.
Figure 33 is a flow diagram of one embodiment that illustrates OMA DM v.1.3 Client Authority Delegation (bootstrap approach) enhanced with additional parameters
Figure 34 is a flow diagram of one embodiment that illustrates an instantiation of the generalized Deployment Type A as an oneM2M embodiment using SL only Device Management.
Figure 35 is a flow diagram of one embodiment of a BBF embodiment of a ML based Client Authority Delegation with Deployment Type E.
Figure 36 is a diagram of a Graphical User Interface of one embodiment.
Figure 37A is a diagram of a M2M/ IoT/WoT communication system that includes a communication network.
Figure 37B is a diagram of an illustrated M2M service layer in the field domain that provides services for the M2M application, M2M gateway devices, and M2M terminal devices and the communication network.
Figure 37C is a diagram of an exemplary device that may be used to implement any of the network nodes described herein.
Figure 37D is a block diagram of a computer system or server that may be used to implement any of the network nodes described herein.

### DETAILED DESCRIPTION OF ILLUSTRATIVE EMBODIMENTS

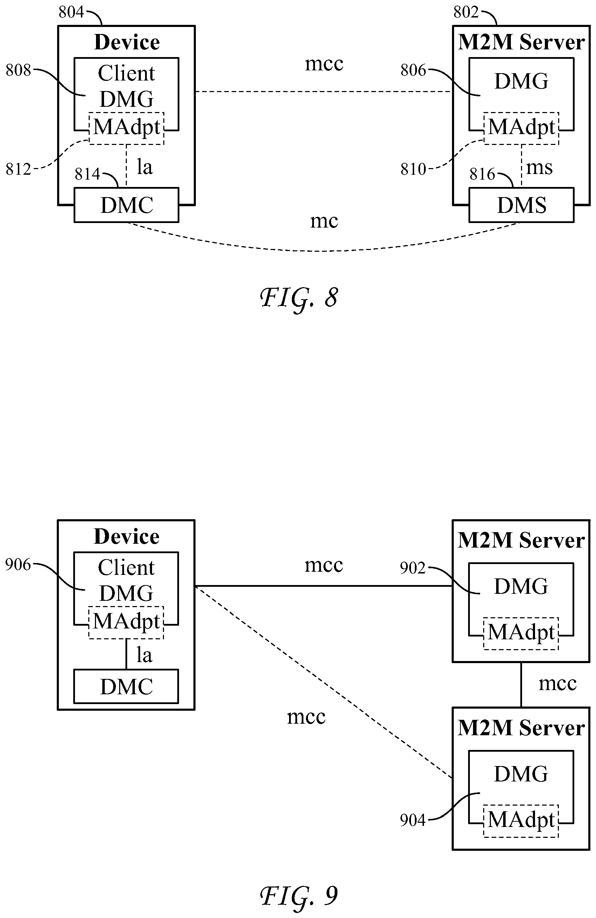

Figure 8 is a diagram of one embodiment of a generic architecture for device management by the Service Layer via the Management Layer. While this abstract model is not extracted directly from a specific, existing standard, it can be mapped to Service Layer architectures such as ETSI M2M in Figure 6 and oneM2M in Figure 7, and as such it generalizes both. This model is used to identify deployment options, and as a framework for the problems to be presented and the solutions to be proposed.

In embodiments described herein, the term device management server (lower case), DM server or DMServ will describe generic server device management functionality either in a Service Layer or Management Layer. A first type of device management server is in the Service Layer. The first type of device management server can include a DMG server in a oneM2M network or Remote Entity Management (REM) functionality in a ETSI M2M network. A second type of device management server is in the Management Layer. This second type of device management server can include legacy device management servers, such as a Device Management Server (with capital letters) or DMS which can be based on a dedicated DM Technology such as OMA or BBF TR-069. The Management Layer is the portion of the architecture defined to include these legacy device management servers.

For ease of reference, in the Figures, the first type of device management server in the Service Layer are labeled DMG and the second type of device management server in the Management Layer are labeled DMS. The corresponding clients managed by DMSs are labeled DMC.

In the generic architectural model, SL entities such as the M2M Server 802 and the Device 804 include generic DMG functionality 806 and 808. The DMG notation is used for both server and client side, as it is done in oneM2M. However, when the client role needs to be specified the term "Client DMG" (DMG-C) is used. The terms device management client (lower case) or DM client will describe generic client DM functionality either in a Service Layer or Management Layer. The DMGs 806 and 808 communicate directly via the mcc SL interface, which may be instantiated between Server DMGs or between Client and Server DMGs. While the "mcc" naming mirrors the "Mcc" in oneM2M notation, it is meant as an abstraction of corresponding SL interfaces, e.g. mId in ETSI M2M. DMGs can also interface to DM Technology specific entities such as DMS and DMC, using DM Technology specific interfaces (ms, la) and by using MAdpt functionality 810 and 812.

If the DM Technology provides an inter-DMS interface (e.g. DM-6 in OMA DM), the DMG-DMS ms interface may be the same or an extension of it, because of the translation role of the MAdpt 801 and 812. Otherwise DM Technology specifications need to provide a specific ms interface to SL in order to enable inter-layer communications.

Figure 8 shows the MAdpt 810 and 812 on the DMG border to signify that MAdpt functionality 810 and 812 may be included in the DMG 806 or 808, or may be implemented as a separate SL capability. Similarly, the DMS 816 and DMC 814 on the border of the SL entities signify that the respective functionalities may reside within the SL or on external entities. With this in mind, this graphical representation can be relaxed in subsequent drawings; the placement of the DMS 816, DMC 814 and MAdpt 812 and 814 symbols do not reflect any constraint on implementation unless specified.

This architecture reveals a layered approach to Device Management when SL capabilities are used in addition to the legacy DM-specific technologies such as OMA-DM or BBF TR-069 to provide DM functionality:
- The Management Layer (ML) can use DM specific protocols and procedures over DMS-DMC interfaces (mc) to provide device management. OMA-DM and BBF TR-069 are examples of technologies/standards specifying the functionality and interactions in the ML.
- The Service Layer (SL) can use protocols and procedures over the mcc interface to enable a variety of service capabilities, one of which is DM. In a oneM2M embodiment, for device management purposes the SL can:
   ∘ Use the DMG Common Service Functions (CSFs) and the ms interface to provide SL information and control to the DMSs. These SL interactions translate then into ML interactions between DMS and DMC for management purposes
   ∘ Use Client and Server DMG CSFs and the mcc interface to provide DM capabilities within the SL.

In the notation used herein DMServs interacting directly with the clients are considered to have Primary role and may be either DMSs or DMGs. DMS may interact with DMGs in the SL, in which case the DMGs are considered to have Secondary roles.

In the figures and description, servers denoted with -1 are the Delegating servers, the ones having management authority over the client before the procedure takes place. Servers denoted with -2 are the Delegated servers, to which the management authority is transferred via this procedure.

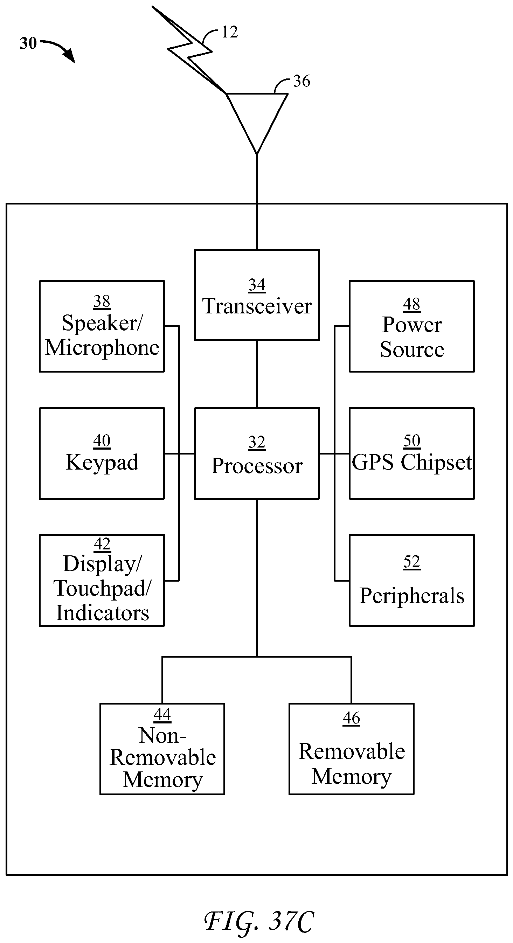

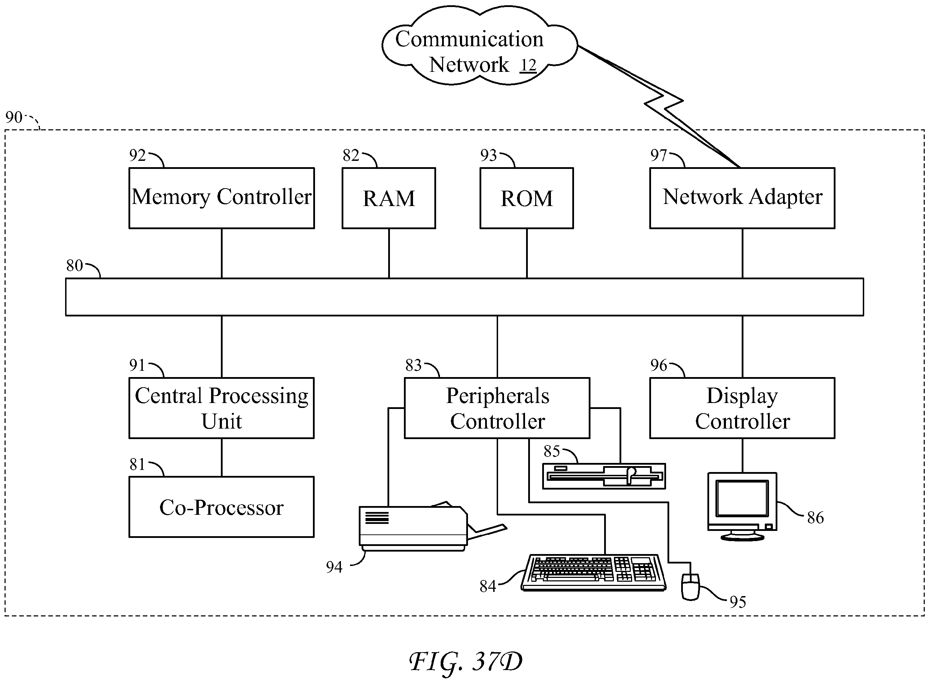

It is understood that the functionality illustrated in Figure 8, may be implemented in the form of software (i.e., computer-executable instructions) stored in a memory of, and executing on a processor of, a node of an M2M network (e.g., a server, gateway, device, or other computer system), such as one of those illustrated in Figures 37C or 37D described below.

While the model in Figure 8 captures a Generic Architectural Model, a few main types of deployment cases are outlined below. These cases are distinguished by the layers involved in Device Management, interfaces available and by which entities have Primary role:

Figure 9 illustrates an exemplary Deployment Type A where the SL provides DM functionality directly, without using any dedicated DM Technologies. Server DMGs 902 and 904 communicate within SL via mcc. The DM commands and operations can be provided through the client-server mcc interface. In this deployment the DMGs 902 and 904 in the SL have Primary role; there are no Secondary ones and no ML present.

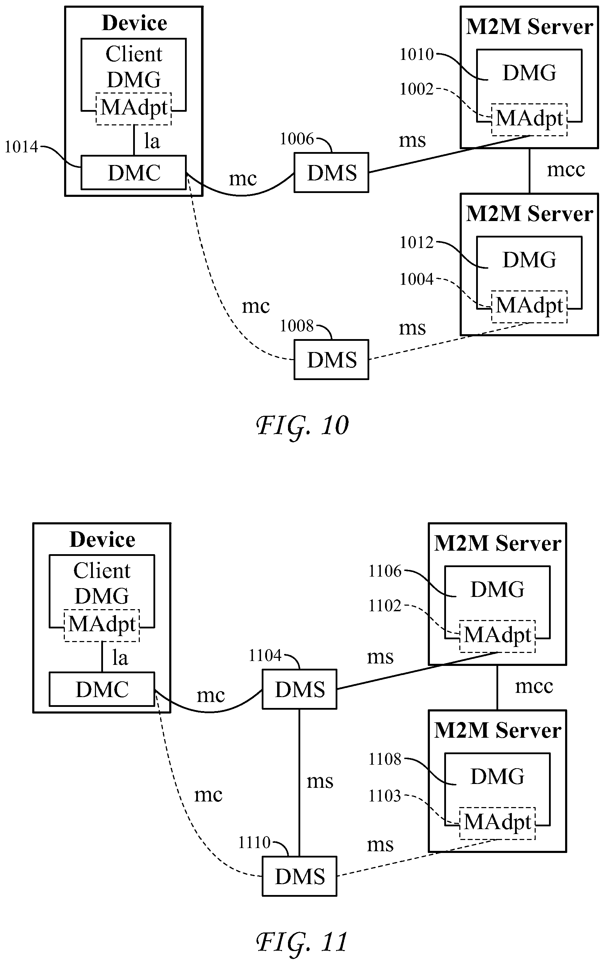

Figure 10 illustrates an exemplary Deployment Type B where the SL uses DMG functionality, including MAdpt 1002 and 1004, to communicate to DMS 1006 and 1008 though ms. The DM interactions are provided through via mc by DMSs 1006 and 1008 in Primary role. The mcc interface is available between DMGs 1010 and 1012, who have Secondary role.

In this case, either the ms interface is not instantiated between DMSs 1006 and 1008 or a delegation procedure between DMSs 1006 and 1008 has not been specified. This corresponds to BBF or OMA-DM pre-1.3 versions, where authority delegations are not defined. It also corresponds to OMA-DM v 1.3 or later when the ms interface between the DMS 1006 and 1008 is not instantiated. The Primary DMServs are the DMSs 1006 and 1008 in the ML, and the DMGs 1010 and 1012 have Secondary role.

Figure 11 illustrates an example of an exemplary Deployment Type C in which the SL uses DMG functionality, including MAdpt 1102 and 1103, to communicate to DMS 1104 though the ms interface, and DMS 1104 performs DM via mc. The mcc interface is available between server DMGs 1106 and 1108. The main DM interactions are provided through the DMS-DMC commands and operations).

The ms interface is instantiated between DMSs 1104 and 1110 and delegation methods between the two, within ML, are available, e.g. OMA-DM 1.3 or later. The DMSs 1104 and 1110 in the ML have Primary role and the DMGs 1106 and 1108 a Secondary one.

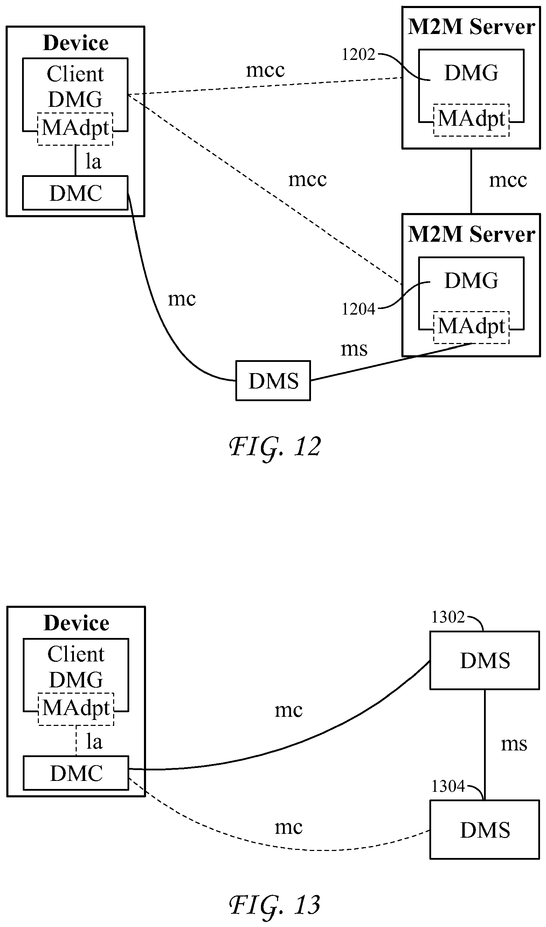

Figure 12 illustrates an exemplary Deployment Type D in which Device Management is coordinated in the SL either directly or via ML, and both the mc and the server-client mcc interfaces are usable for DM commands and operations. In this case the management is coordinated by SL with the DMGs 1202 and 1204 moving between Primary or Secondary roles. The mcc interface is available between server DMGs 1202 and 1204.

Figure 13 illustrates and an exemplary Deployment Type E in which DM functionality is coordinated by ML and is provided through DMS-DMC interactions via the mc interface. The ms interface might be available between DMSs 1302 and 1304, depending on DM Technology. DMSs 1302 and 1304 have the Primary role, without Secondary DMServ. There is no SL.

In general, for all deployments using SL, one Secondary DMG may interact with multiple DMSs.

From the deployment types described in this section it should be noted that DMSs are always deployed as Primary DMServ, while the DMGs may be deployed either as either Primary or Secondary DMServ. A CAD procedure may involve zero or several Secondary DMServ, but the end result is a transfer of management authority from a Primary DMServ to another.

For example most existing deployments do not include a SL (deployments type E shown in Figure 13) so DMSs have Primary role and there is no Secondary role. SL specifications such as oneM2M and ETSI M2M provide the means for integration of existing DM Technologies/ML with the SL, and as such the earliest deployments involving SL are likely to be type B (shown in Figure 10) or type C (shown in Figure 11) with DMS as Primary and DMGs as Secondary DMServ.

Deployment type A (shown in Figure 9) involve SL only and DMGs have Primary role, while in deployment type D (shown in Figure 12) the Primary role is transferred between DMGs and DMSs. Deployments types A and D require DM interactions over the mcc interface to be specified, which this is currently not available but within oneM2M scope.

Device Management functionality requires flexibility in transferring the authority to manage a DM client between servers dynamically, in order to provide efficient use of the available resources. A method specified for transferring between DM servers the authority to manage a DM client is the Client Authority Delegation (CAD).

CAD methods enable algorithms which would dynamically re-allocate the list of devices to be managed between servers (for load balancing, device grouping by server, etc.), so that individual servers do not end up managing unreasonably large (or low) numbers of devices. The ability to recognize and correct these situations at DM level avoids relying on lower layer load- balancers capable of reacting only based on active loads/sessions, rather than on per-device and per-capability basis.

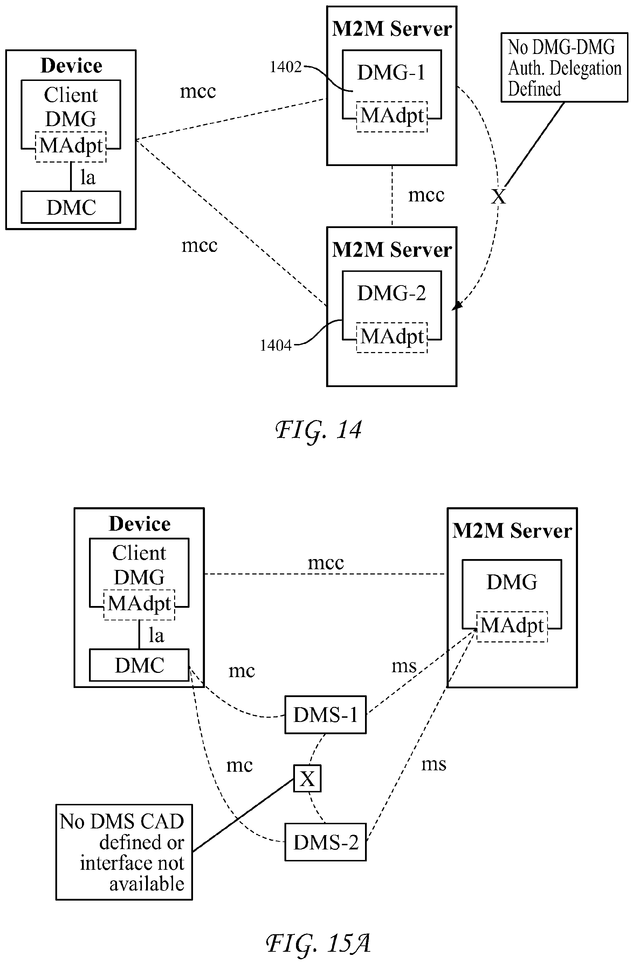

Existing Service Layer specifications (e.g. ETSI, oneM2M) do not address CAD procedures. This issue is reflected, the example of Figure 14 where no DMG 1402 to DMG 1404 delegation methods may be employed.

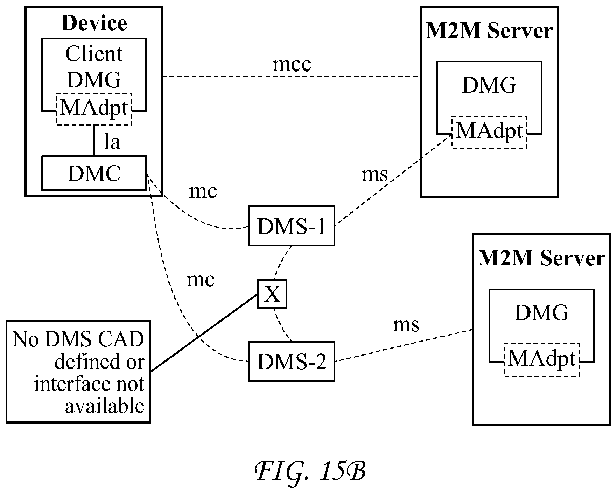

Some existing DM technologies (e.g. OMA-DM pre-v 1.3, BBF) do not provide any delegation methods at ML level, so functionality such as device load balancing cannot be provided in this case directly in the ML. When the technology is integrated with a SL it further limits the way the devices are assigned to be managed between DMGs as shown in Figure 15B or within one DMG as shown in Figure 15A to semi-static re-configuration methods.

Currently, both the Service and the Management Layer lack the capability of optimizing resource use and delegation logic based on information available at other entities in the layer. Both layers also lack the capability to forward management object information from a delegating to a delegated DM server, in order to optimize execution of DM procedures at the DM client when client management responsibility is transferred from one DM server to another. The SL lacks also the capability to forward registration information between the servers or the trigger the client to register with another DM server for the purpose of the management authority transfer.

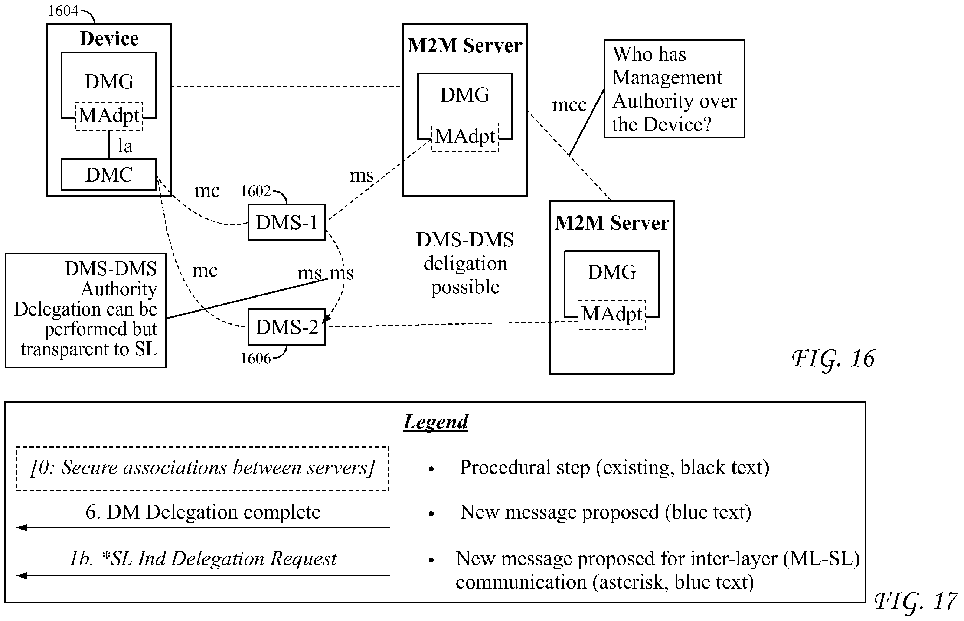

Some existing DM technologies (e.g. OMA v1.3) do provide CAD procedures directly between DMS. These procedures are transparent to the SL and as such they pose coordination issues, as the corresponding SL DMG entities are unaware of management authority changes at the DMS level, which could result in DMGs not having accurate accounting of the devices it manages within the SL. In the example of Figure 16, DMS-1 1602 can transfer authority for device 1604 to DMS-2 1606 but this change would be transparent to DMGS 1608 and 1610. This lack of coordination violates assumptions/requirements in some Service Layer specifications, such as oneM2M TS-0001 sec 6.2.4.1.2.3.

The transfer of responsibility to manage devices between DM servers without reconfiguration is a fundamental functionality necessary to enable capabilities such as device load balancing, DM server administration, etc. The absence of CAD methods in SL and ML specifications limits these capabilities in current deployments. In mixed deployments, CAD methods currently available in ML are transparent to the SL, limiting their usefulness.

The Client Authority Delegation (CAD) is a method to transfer the authority/responsibility to manage a DM client from one DM server to another, and it includes a series of messages exchanged between the servers involved in the management of the client before and after delegation, and between the servers and the client. Depending on the deployment scenario, the entities involved in the delegation procedure might involve one or two DMSs, and/or one or two DMGs, along with the DM clients.

It is understood that the functionality illustrated in Figures 9-16, may be implemented in the form of software (i.e., computer-executable instructions) stored in a memory of, and executing on a processor of, a node of an M2M network (e.g., a server, gateway, device, or other computer system), such as one of those illustrated in Figures 37C or 37D described below.

The following flows illustrate the messaging used or defined for CAD in a variety of topologies and optional conditions. For the flows described in this section the newly defined messages and associated parameters are described below. Flows introduced in this section use the generic architectural model of Figure 8.

The following issues are discussed below:
- CAD for deployments type A, with DMGs having Primary role and no ML
- CAD for deployments type B, with integrated layers but without ML CAD methods available, such as in OMA DM pre-v1.3 or for the cases where no inter-DMS interface is instantiated.
- CAD for deployments type C, with integrated layers and ML CAD methods available, such as in OMA DM v 1.3. This section distinguishes two cases, depending on who triggers the delegation and how:
   ∘ *SL Indication:* where the delegation is triggered in ML who provides indications of the activity to SL
   ∘ *SL Coordination:* where the delegation is triggered by SL and synchronization between the layers is provided
- CAD for deployments type D, with management responsibility being transferred between layers
- CAD for deployments type E, specifically enhancements to OMA DM v1.3 method when only ML is deployed.

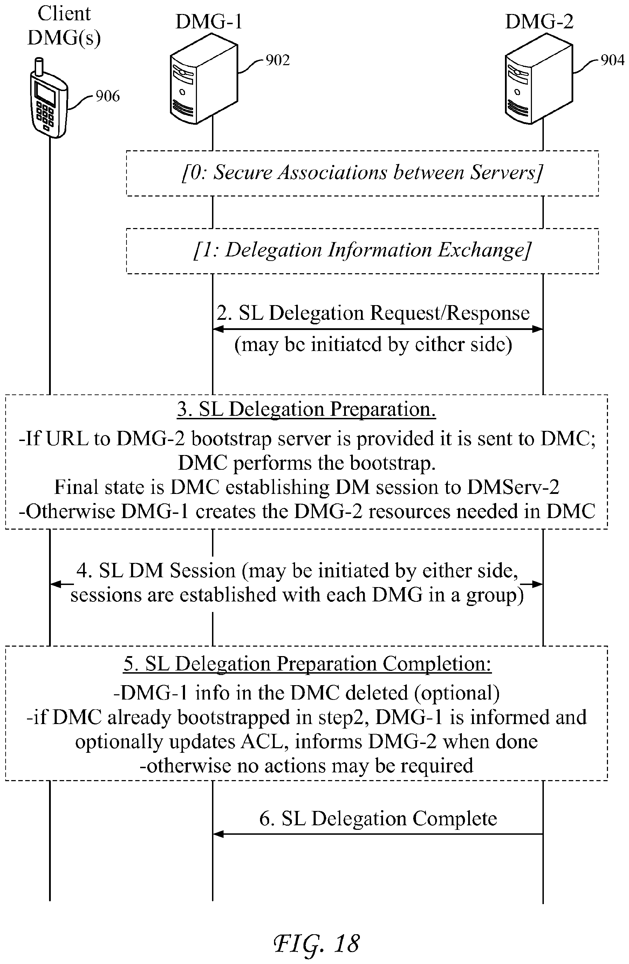

The flows of figures 18-35 use notation according to the legend in Figure 17.

It is understood that the entities performing the steps illustrated in Figures 18-35 are logical entities that may be implemented in the form of software (i.e., computer-executable instructions) stored in a memory of, and executing on a processor of, a network node or computer system such as those illustrated in Figure 37C or Figure 37D. That is, the method(s) illustrated in Figures 18-35 may be implemented in the form of software (i.e., computer-executable instructions) stored in a memory of a network node, such as the node or computer system illustrated in Figure 37C or Figure 37D, which computer executable instructions, when executed by a processor of the node, perform the steps illustrated in Figures 18-35. It is also understood that any transmitting and receiving steps illustrated in Figures 18-35 may be performed by communication circuitry of the node under control of the processor of the node and the computer-executable instructions (e.g., software) that it executes.

*Client Authority Delegation for deployments type A (oneM2M SL directly)* Figure 18 is a flow diagram that shows an exemplary delegation between two oneM2M DMG instances, when no underlying DM technology is used (deployment type A). OneM2M has yet to define how DMG's interact with each other. The messages in this subsection are required in SL specifications or implementations providing for CAD functionality within the SL, and are described below.

Step 0 of Figure 18 is the establishment of secure associations between servers. This step is considered as a pre-condition to the start of the delegation procedure. Its outcome is that all the servers have established secure associations with each other.

Step 1 of Figure 18 is the delegation information exchange. In this step information relevant to the delegation procedure are exchanged.

The purpose of the delegation information exchange is to allow the DM servers to inform each other about how heavily they are loaded, how many more devices they can support, etc. This information may be used for implementing device load balancing algorithms, for triggering CAD procedures dynamically or for processing a delegation request and determining a desirable response, etc. This information may also enable logic to determine if a CAD procedure should be triggered. The delegation information message exchange itself may be triggered by applications for server administration, device load balancing algorithms, etc.

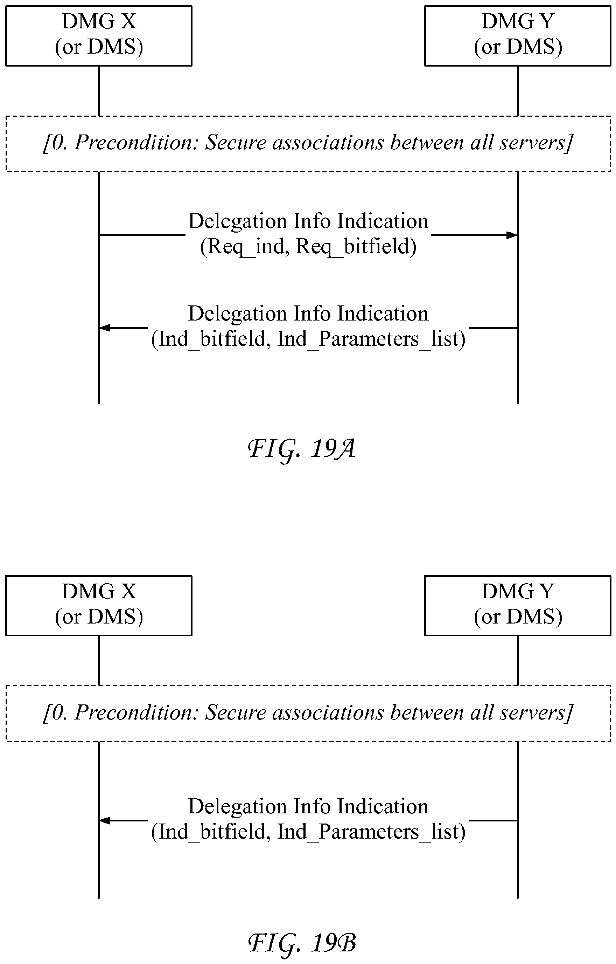

In the CAD procedure in this section the messages are exchanged between DMGs 902 and 904. However, in general, Delegation Information Messages may be exchanged between two DMGs, between two DMSs or between a DMG and a DMS. The information may be provided as a response to a request for information (Figure 19A) or may be sent autonomously (Figure 19 B). In both cases the messages may be initiated by either side.

The message exchange occurs after secure associations between servers have been established, but it may or may not directly precede the CAD procedure. This information may be exchanged within a dedicated session or as a message exchange within sessions established for other purposes; the messages may be piggy-backed or the information may be included in other relevant messages.

The information exchanged in this step may include:
- Information/status of server resources: e.g. number of devices managed, CPU load or available memory, etc. for purposes such as load balancing, etc.
- Global information about resources available: e.g. other available DMServs just added to the system or under-loaded, other available DMServs with specific capabilities or serving a specific location, other available DMServs for a given MA, DMServ topology, Service Capabilities of DMServs in the system, etc.
- Information about DM clients managed by each server: e.g. type/model/manufacturer of managed clients, their location, service capabilities, device sleep schedule, etc.
- Global information about DM clients in the system: e.g. topology of client groups based on device characteristics, location, etc., service capabilities associated with all the managed devices, etc.
- Local or global DM policies.

Based on the information exchanged the DMServs involved may choose to trigger a CAD procedure (immediately or later upon a condition being met), may forward this information to other entities, or may determine if a CAD procedure should be accepted or denied.

Step 2 of Figure 18 is the SL Delegation Request/Response exchange. In this step the CAD procedure is initiated, and a SL Delegation Request and the corresponding Response messages are exchanged between the two DMGs 902 and 904. Either server may initiate the procedure by sending the request and receiving the response; as simplification this is represented as one bi-lateral exchange.

The CAD procedure may be initiated by the SL Delegation Request/Response exchange based upon triggers such as load balancing algorithms conditions being met, specific request by allowed MAs, etc. A detailed description of the SL Delegation Request/Response messages, their parameters and use is provided below.

Upon Receipt of a SL Delegation Request/Response the delegating DMG 902 creates a Delegation resource for managing the Delegation process. An embodiment of this resource for oneM2M is presented below. Since the target of the delegation indicated in the SL Delegation Request may be one client or a group there may be a Delegation resource for each client or one for the group.

Depending on the target of the delegation, some messages in the next three steps (delegation preparation, session initiation and preparation completion) may be instantiated for each individual DM client in the group. For ease of notation the actions pertaining to a single DM client 906 is detailed.

In step 3 of Figure 18, SL Delegation Preparation is done. In this step, the Delegating DMG 902 provides the client 906 with information about accessing the Delegated DMG 904. Two main options are distinguished.

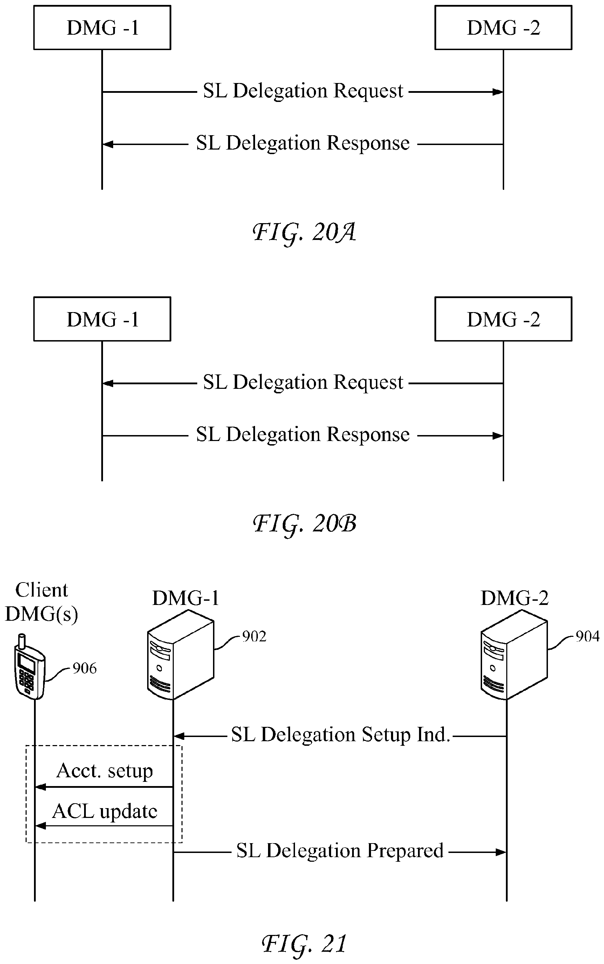

Option A of step 3 is the Account Configuration option. In option A of step 3, the DMG-2 904 provides DM account information to DMSG-1 902, who configures the client and updates the ACL. Figure 21 is a flow diagram of SL Delegation Preparation with Account information setup option. The dashes encapsulate the actions repeated for each individual DM client in the group.

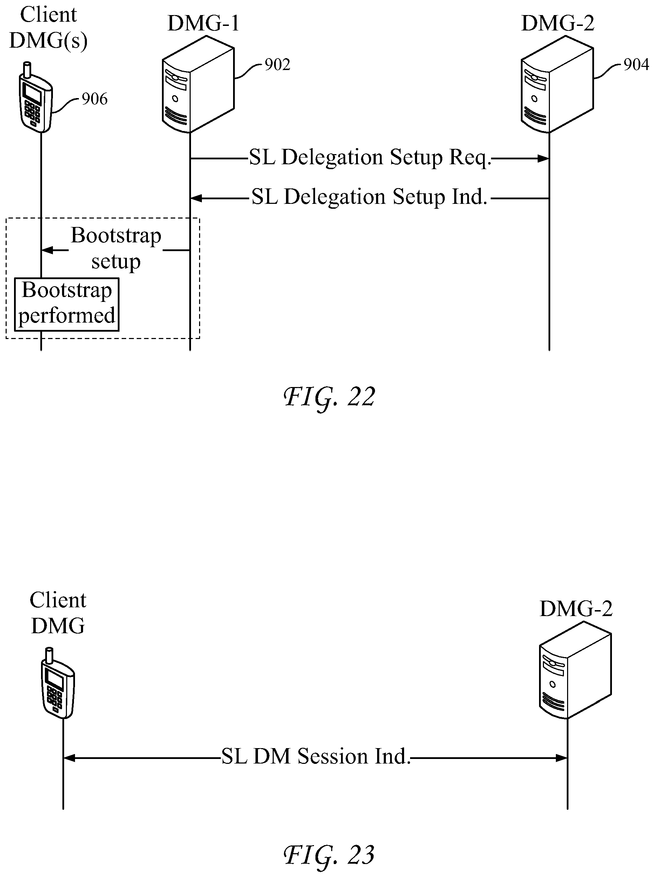

Option B of step 3 is the Bootstrap Server configuration option. In option B of Step 3, the DMG-2 904 provides a Bootstrap Server URL which is forwarded by DMG-1 to the client. The client 906 initiates a connection with the bootstrap server, performs the bootstrap, and is ready to initiate a DM Session with DMG-2 904 The ACL will be updated by DMG-1 902 only after being notified that the DM client has been successfully bootstrapped. Figure 22 is a flow diagram of DL Delegation Preparation with bootstrap server URL option. The dashes encapsulate the actions repeated for each individual DM client in the group

At the end of Step 3 of Figure 18, the client 906 and DMG-2 904 are ready to initiate or accept a DM session between them. If account configuration was performed, DMG-1 902 sets the delegation status to "prepared".

The Bootstrap_Setup, Account_Setup and ACL_Update messages can be instantiated for each client in the delegation target. Messages and parameters are detailed below

Step 4 of Figure 18 is the SL DM session initiation step. In this step, a DM session is initiated between the client 906 and DMG-2 904. Depending on the delegation configuration option the session may be initiated by either side. A DM session is initiated for each client in the delegation target. Figure 23 is a flow diagram of DM Session initiation in SL.

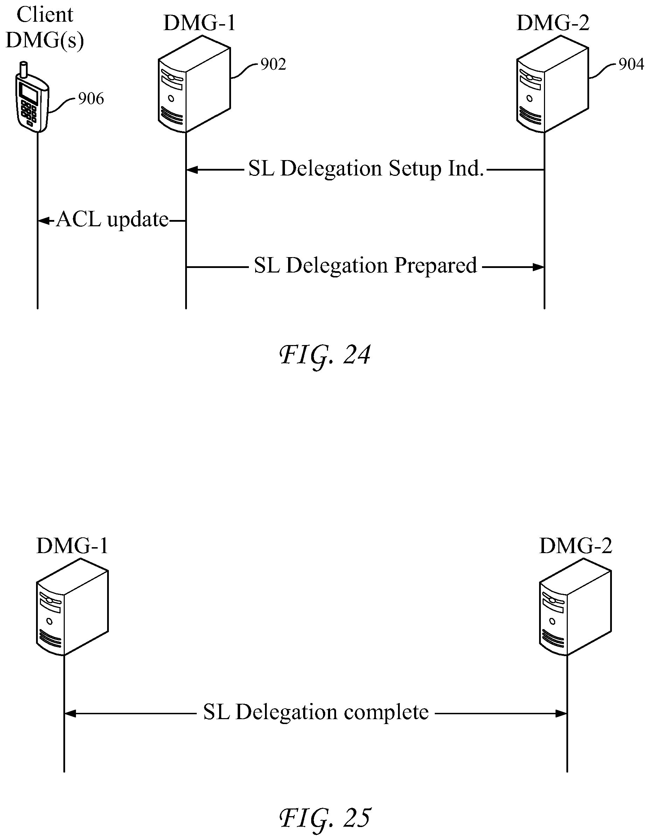

Step 5 of Figure 18 is the SL delegation preparation completion step. This step provides completion of the client configuration (by updating the ACL) when the bootstrap server URL method is used. It ends when the client is considered by DMG-1 to be fully prepared. Figure 24 is a flow diagram of DM client Preparation completion for the bootstrap server URL option. In Option A these actions are completed in step 2 so this step is void for that case.

The ACL_Update message can be instantiated for each client in the delegation target; however the messages between DMG-1 and DMG-2 can be instantiated once. Note that because of the use of messages identical with those used in the Delegation Preparation step the messages for both steps will be detailed together.

Step 6 of Figure 18 is the SL Delegation Completion step. In this step, the completion of the CAD process is propagated through the system in order to synchronize the status at all servers. The delegated server indicates that delegation is considered complete and that it fully manages the client or, if partial delegation was employed, the delegated functionality is managed by DMG-2. Figure 25 is a flow diagram of Delegation completion.

*Client Authority Delegation for deployments type B (oneM2M SL without OMA ML delegation methods).* The following flows may be used in deployments where the two Primary DMServs are DMSs, either non-communicating or without ML CAD method, SL provides the CAD method and the coordination (deployment type B). The procedure may include exchanges of Delegation Information Messages between the DMGs or between a DMS and its associated DMG, and the information exchanged is used for CAD triggering by the DMGs.

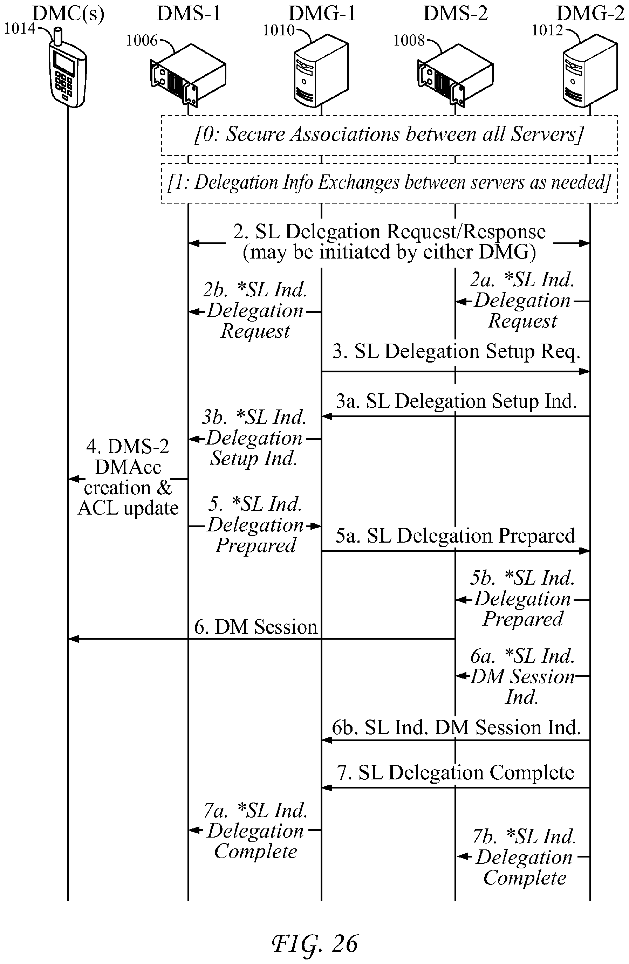

Figure 26 is a flow diagram that illustrates a flow in which the two DMSs 1006 and 1008 are connected to the separate DMGs 1010 and 1012 in the SL. The Account Configuration Option is illustrated, but either one could be used. The delegation is initiated by one DMG 1010 through a message to the other DMG 1012, each of them communicating only with the DMS it is connected to and each keeping track of the clients it manages trough the associated DMS.

Note that steps 4 and 6 of Figure 26 correspond to OMA messages, the rest are messages implementing the CAD SL flow above. Additional indication messages between DMGs and DMS are also used in procedures described below.

*Client Authority Delegation for deployments type C (oneM2M SL with OMA ML delegation methods)* The following flows may be used in deployments where the two Primary DMServs are communicating DMSs and a CAD method transparent to the SL (in this case based on OMA v 1.3) is available via the ms interface in the ML (deployment type C). There are two cases depending on who triggers the delegation and how: in the first case the delegation is triggered between DMSs using a ML method, in the second it is triggered between DMGs using a SL method. These differences are reflected also in which layer needs delegation related information and which implements algorithms such as the device load balancing, etc.

Some messages in these flows correspond to those in the OMA CAD procedure while others correspond to the SL CAD procedure introduced before. This means that OMA DM deployments type E which implements the ML procedure may be integrated with a SL, resulting in deployments type C.

The new messages have been highlighted on the figures, and for emphasis the messages for inter-layer communications have been noted with a preceding asterisk. The inter-layer messages should be introduced by either ML or SL specifications when providing for DMG-DMS interactions and specifically for CAD functionality.

OMA v1.3s ML with oneM2M SL indication These flows may be used in deployments type C with communicating DMSs and where a CAD method transparent to the SL (in this case based on OMA v 1.3) is available via the ms interface in ML. SL is present and indications of the delegation activity are provided to the DMGs and used to synchronize the SL to the delegation activity in the ML. Delegation is triggered in ML and the information exchanged in the Delegation Info Exchange step is used for CAD triggering by the DMSs. Delegation Information Messages may be exchanged between any two DMServs involved, i.e. between two DMGs, between two DMSs, or between a DMG and a DMS.

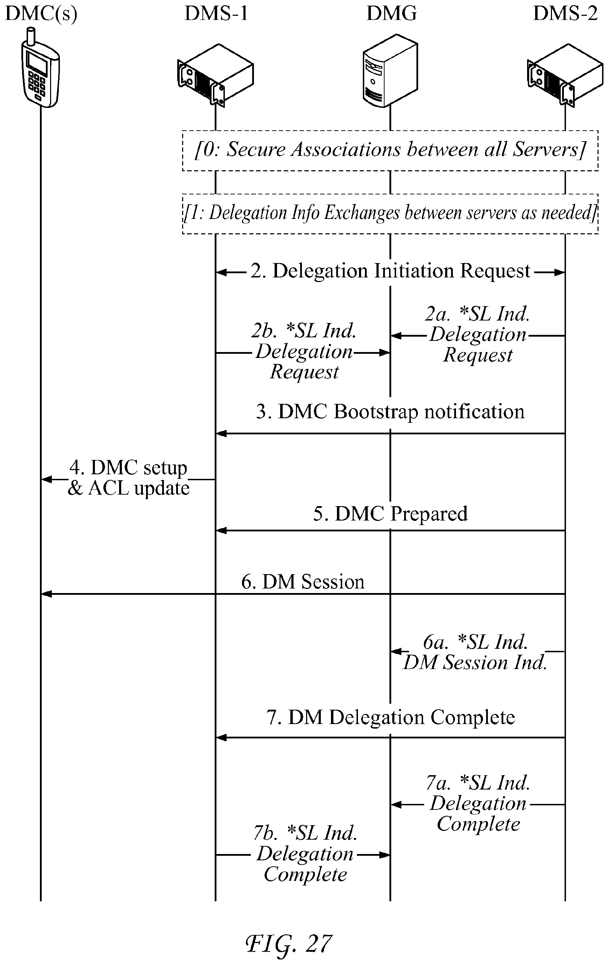

Figure 27 is a flow diagram that illustrates the flow in which the two DMSs are connected to the same DMG in SL with Secondary role for both DMS-1 and DMS-2. The OMA delegation approach using DMS-2 DMAcc (is shown, but either one could be used. The DMG keeps track of the devices it manages trough both associated DMSs. Note that all steps of Figure 27 except: 2a and b; 6a; 7a and b; and procedure step 1 correspond to the steps of the OMA CAD Discussed above with respect to Figures 4 and 5.

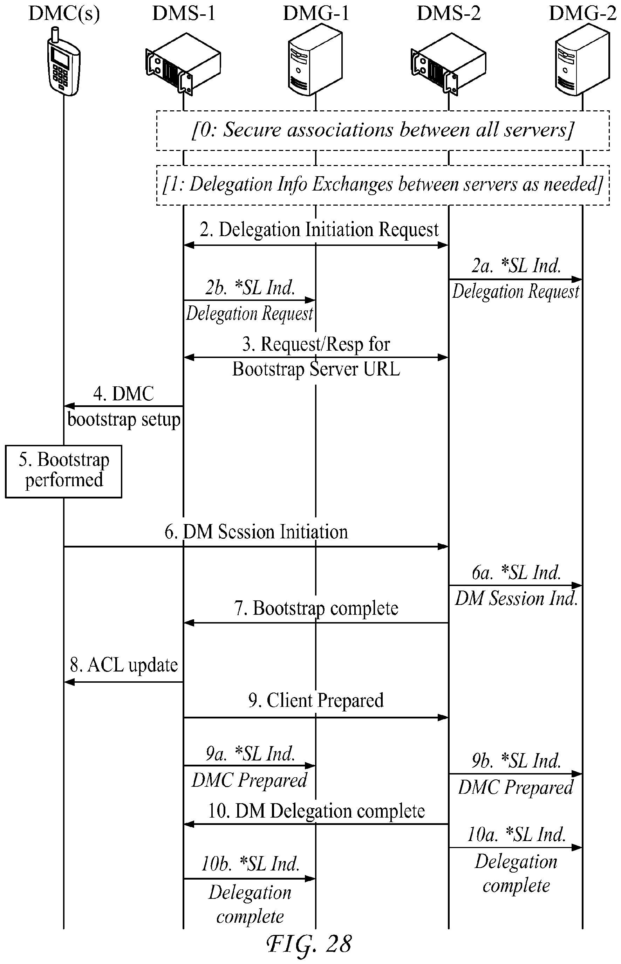

Figure 28 is a flow diagram that illustrates the flow in which each DMS is connected to a different DMG in SL with Secondary role. The OMA delegation approach using bootstrap server URL is illustrated, but either one could be used. Each DMG keeps track of the devices it manages trough the associated DMS. Note that all steps of Figure 28 except: 2a and b; 6a; 9a; 10a and b; and procedure step 1 correspond to the steps of the OMA CAD discussed above with respect to Figures 4 and 5.

OMA v.1.3 ML with oneM2M SL coordination These flows may be used in deployments type C with communicating DMSs and where a CAD method transparent to the SL (in this case based on OMA v 1.3) is available via the ms interface in ML. Delegation is triggered in SL, who coordinates the delegation activity such that it is synchronized with the delegation activity in the ML. The information exchanged in the Delegation Info Exchange step is used for CAD triggering by the DMGs. Delegation Information Messages may be exchanged between any two DMServs involved, i.e. between two DMGs, between two DMSs, or between a DMG and a DMS.

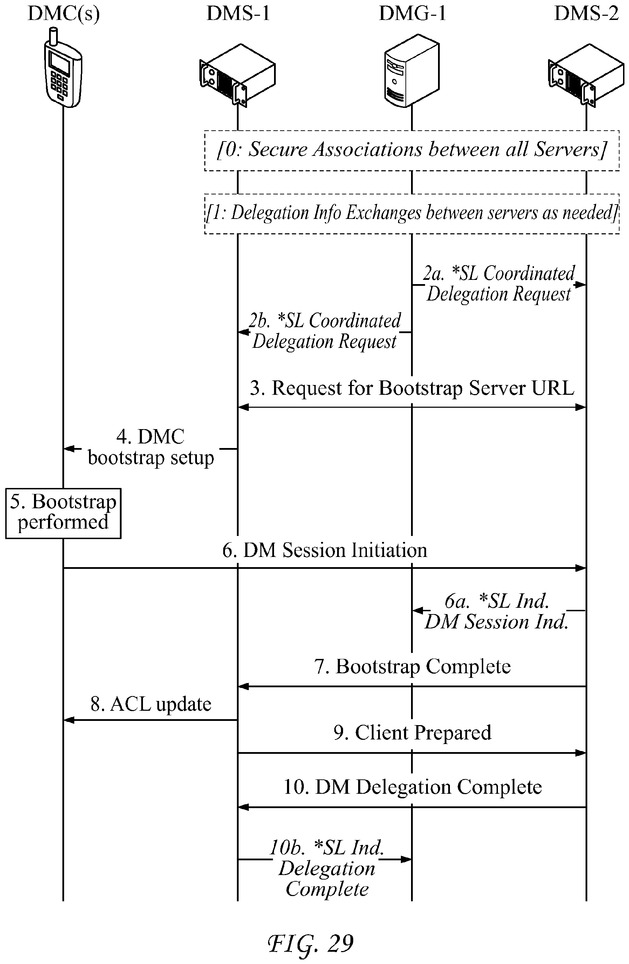

Figure 29 is a flow diagram that illustrates the flow in which the two DMSs are connected to the same DMG in the Service Layer with Secondary role for both DMS-1 and DMS-2. The Bootstrap Server Configuration Option is shown, but either one could be used. The DMG triggers the delegation procedure and manages a superset of the devices managed by DMS -1 and DMS -2. Note that all steps of Figure 29 except 2a, b; 6a; 10b; correspond to the flow steps of the SL CAD discussed with respect to Figure 18.

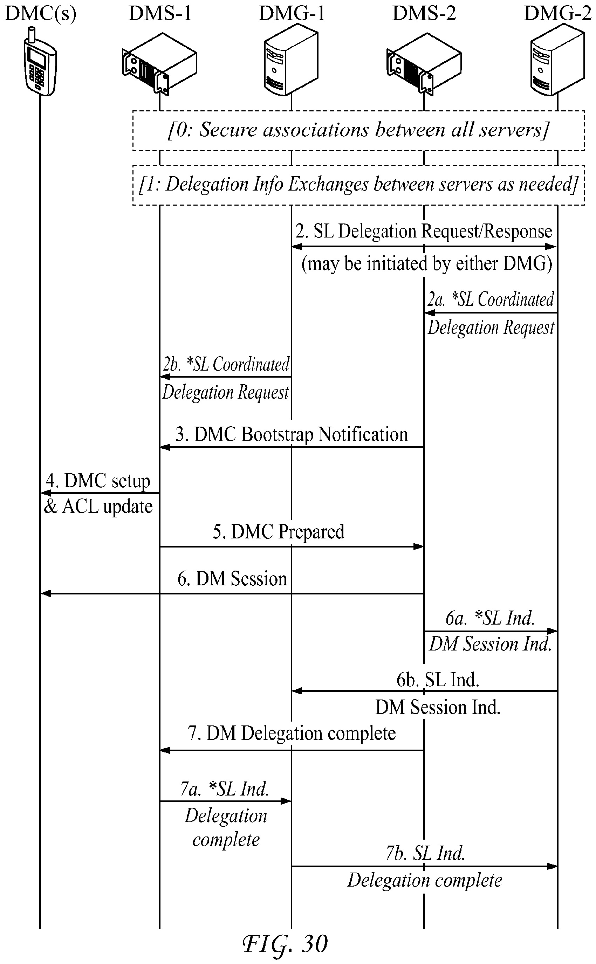

Figure 30 is a flow diagram that illustrates the flow in which each of the two DMSs is connected to separate DMGs in the SL. The Account Configuration Option is illustrated, but either one could be used. Each DMG keeps track of the devices it manages trough the associated DMS. The delegation may be initiated by one DMG through a message to the other DMG, each of them communicating only with the DMS it is connected to. Note that all steps except 2, 2a, 2b; 6a, b; 7a, b correspond to the flow steps of the SL CAD discussed with respect to Figure 18.

*Client Authority Delegation for deployments type D (inter-layer OMA-oneM2M delegation)* The following flow may be used for delegation when the authority is transferred between a DMS and a DMG (deployment type C); SL provides coordination of the delegation activity. In a type D deployment, the Primary role switches from one type of server to another and from one layer.to another.

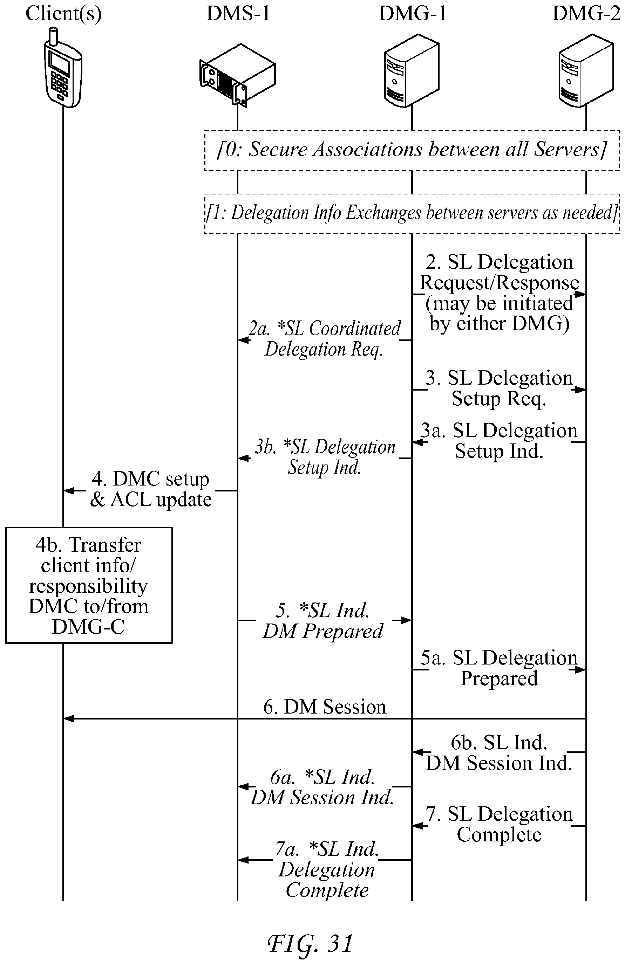

Figure 31 illustrates the flow in which the transfer occurs from a DMS to a DMG which is different than its Secondary DMServ. The Account Configuration Option is illustrated, but either one could be used. DMG-1 keeps track of the devices managed by the associated DMS-1.

The procedure may include exchanges of Delegation Information Messages between the two DMGs or between a DMG-1 and a DMS-1, with the information being used for triggering by the SL.

The delegation may be initiated by either DMG through a message to the other DMG, but only DMG-1 communicates directly with the associated DMS in this case.

Note that some steps of Figure 31 (1; 2; 3, 3a; 5a; 6b; 7) correspond to messages in the SL CAD flow discussed with respect to Figure 18; steps 4 and 6 of Figure 31 are existing OMA DM messages.

The CAD procedure for deployments type D transfers the role of Primary DM Server between (either to or from) DMSs and DMGs. The procedure also transfers the client role and associated information between DMC and Client DMG (DMG-C) on the Client. Figure 31 Step 4a illustrates this processing internal to the device managed for the case in which DM changes from being performed in the ML to being performed in the SL.

*Client Authority Delegation for deployments type E (OMA-DM v1.3 enhancements).* The following flows reflect the OMA DM v 1.3 procedures described for CAD between two DMSs in a deployment type E, without SL. The flows indicate additional parameters which may be used to enhance this procedure if added to the existing OMA DM messages.

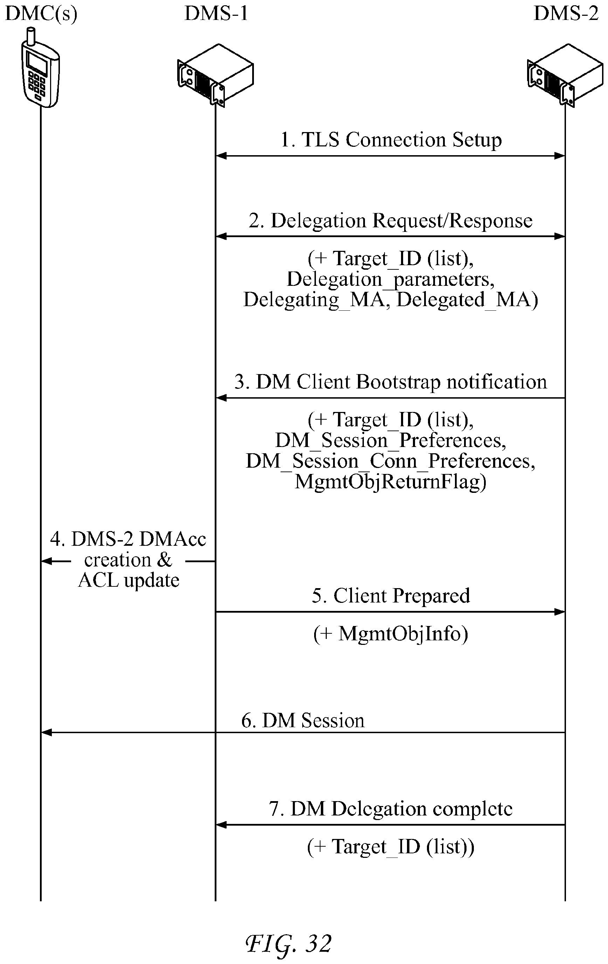

Figure 32 is a flow diagram that illustrates OMA DM v.1.3 CAD (DMS-2 DMAcc approach) enhanced with additional parameters.

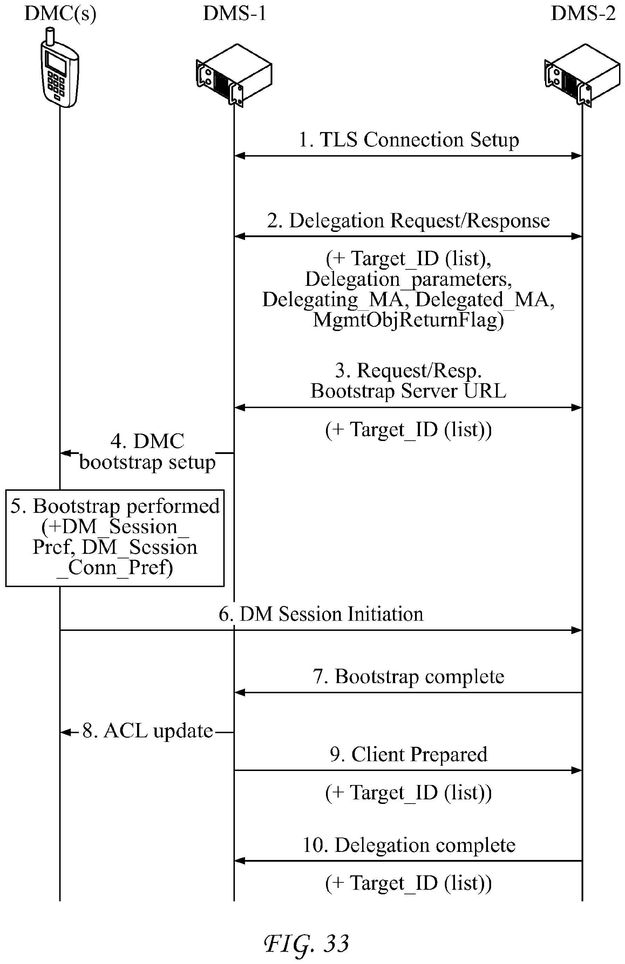

Figure 33 is a flow diagram that illustrates OMADM v 1.3 CAD (bootstrap approach) enhanced with additional parameters

*Delegation messages and parameters* This section provides details on the CAD messages included in the flows of Figures 18-35 They have been grouped by the procedural step(s) in which they appear. All the following messages can be bundled or piggy-backed with/on other inter server messaging.

Delegation Information messages are shown in table 1. These messages may be exchanged during the Delegation information flow. The Delegation Information Messages may be exchanged either between two DMGs, between two DMSs, or between a DMG and a DMS. Further parameter information is provided in Table 2 and triggering and processing information is provided in Table 3.

Tables 2, 5, 8 and 11 show parameters that can be sent in messages used with embodiments. Not all parameters need to be used or supported and embodiments can use additional parameters.

The parameters provided in table 2 can be exchanged during the setup as well as "delegation parameters" (In the information message they just reflect "current" conditions, in the setup the condition triggering the procedure). These parameters enable a service layer or management layer to implement smart load balancing algorithms based on conditions at the servers in the whole layer (info messages can be exchanged between any servers, not just those doing CAD). Those algorithms may then use CAD to actually balance the clients between servers. As such these parameters are significant, beyond the sending of the message. The list of parameters can include number of devices managed, CPU load, Available memory, list of MA allowed, list of primary groups managed, list of service capabilities managed, topology information, policy information, device sleep schedules etc. Defaults for unavailable parameters can be provided in the response if necessary.

In table 2, a list of parameters is given by "Ind_Params_List". The parameters sent in a message can be indicated by the "bitfield " so only a selection of the whole list may be sent/used.

**Table 1 Delegation Information messages**

| Message Name | Description | Key Parameters | Originator/Destination |
|---|---|---|---|
| Delegation_Info_Ind | Message between any DMServ to request or provide delegation related information | Request_ind; Request_bitfield; Indication_bitfield; Indication_Parameters ; | DMServ-> DMServ |
| | | Session_ ID | |

**Table 2 Delegation Information Parameters**

| Parameter | Descriptions |
|---|---|
| Req_ind | Flag indicating if the message is used to request information |
| Req_bitfield | Bit field indicating which parameters are requested, 1 representing parameter needed, 0 parameter not needed, based on an established list of Indication Parameters |
| Ind_bitfield | Bit field indicating which parameters are provided in the Indication_Parameters, 1 representing parameter included, 0 parameter not included, based on an established list of Indication_Parameters |
| Ind_Params_List | List of delegation related parameters e.g.: number of devices managed, CPU load, Available memory, list of MA allowed, list of primary groups managed, list of service capabilities managed, topology information, policy information, device sleep schedules etc. Defaults for unavailable parameters can be provided in the response if necessary. |
| 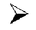 Capabilities | Server capabilities of DMServ providing the info, such as protocols, etc. |
| 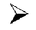 Vendor_Specific_Info | Vendor specific Information, may include e.g. model number, vendor name, etc. |
| 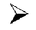 Crnt_nof_managed_clients | Current number of DM clients managed by DMServ providing the info |
| 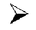 Crnt_CPU_Load | Current CPU load of DMServ providing the info |
| 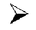 Crnt_Available_Mem | Current available memory of DMServ providing the info |
| 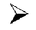 Max_nof _managed_clients | Max number of clients allowed to be managed by DMServ providing the info |
| 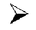 Max_allowed_CPU_Load | Max allowed CPU load of DMServ providing the info |
| 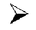 Total_Mem | Total available memory of DMServ providing the info |
| 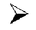 Allowed_MA_list | List of allowed MAs the DMServ providing the info accepts delegation from |
| 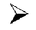 Groups_list | List of groups managed by the DMServ providing the info |
| 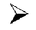 SL_capabilities_list | SL capabilities list (e.g. CSFs for a DMServ in a oneM2M SL) of the DMServ providing the info |
| 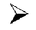 Managed_SL_capabilities_list | SL capabilities list (e.g. CSFs in a oneM2M SL) on a device which can be managed using the capabilities of the DMServ providing the info |
| 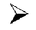 Topology_info | Topology information about the DMServ in the ML and /or SL deployment |
| 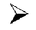 Policy_list | List of policies which are applied/enforced at the DMServ providing the info |
| 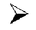 List_client_sleep_schedule | List of known sleep schedules for one or several clients |
| 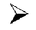 List_client_capabilities | List of known capabilities for one or several clients |
| 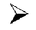 List_Neighbor_DMServ | List of DMServs considered to be in the neighborhood for load balancing purposes |
| 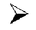 List_Neighbor_DMServ_capabilities | List of capabilities if neighboring DMServs |
| 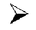 List_Neighbor_DMServ_Ind_Params_List | For any of the Neighboring DMServs, any known parameters in the Ind_Params_List list above |

**Table 3 Triggering and processing of Delegation Information messages**

| **Messages** | **Action Descriptions** |
|---|---|
| Delegation_Info_Ind | Message between any DMServ to request or provide delegation related information. |
| | The message may be triggered by load balancing algorithms in order to gather additional information required for processing. It may also be triggered by DM applications enabling server management by administrators, etc. |
| | Upon receipt of this message the destination DMServ checks the Request_ind. If the message includes a request, it checks the Request bitfield for the information to be provided and it sends a Delegation_Info_Ind as response with all the available parameters or defaults for those unavailable. |
| | Upon receipt destination DMServ correlates the Indication_bitfield with the received Indication_Parameters and processes the received information. |
| | Based on the received information, the destination DMServ can be able to use the received information for algorithms producing triggers for delegation purposes. |

Delegation Request Setup messages are shown in Table 4 These messages may be exchanged during the Delegation Request Setup flow. Further parameter information is provided in Table 5 and additional details on triggering and processing of the messages is provided in Table 6. The Target_ID(list) in table 5, can be added to the existing OMA 1.3 message (see fig 33) in order to enhance the existing method to apply to a whole group of devices at ones, not just one by one. As such for deployments of type E it can provides enhancement beyond what the triggering of the message alone can provide. Further, the addition of Delegation Parameters of table 5, also shown in Figure 33, enable an existing OMA deployment to implement smart load balancing algorithms beyond what the exchange of the message provides. The Delegation Parameters information can be used in all cases and can affect how the recipient acts, e.g. the recipient at 75% load may accept the delegation because the requester is at 98%, while it might not accept from one at 50%. Without it (in OMA 1.3) the recipient can respond only based on its own condition.

**Table 4 Delegation Request Setup messages**

| Message Name | Description | Key Parameters | Originator /Destination |
|---|---|---|---|
| SL_Delegation_Req | Message used for delegation request. The request may be initiated by DMG -1 or by DMG -2. If initiated by DMG-1 the message is a request asking DMG-2 if it is willing to accept management. If it is initiated by DMG-2 it is a request asking DMG -1 to grant management of the client. | Target_Server_ID(s); Target_ID(list); Delegating_MA_ID; Delegated_MA_ID; DM delegated functions list; Access Control Info; Full/Partial Delegation qualifier; Device characteristics; Reason_code; Delegation_Parameters; Delegation_Session_ID | DMG-1-> DMG-2 |
| | | | DMG-2-> DMG-1 |
| SL_Delegation_Resp | Message sent to the delegation initiator from the recipient of the request. If the delegation was initiated by DMG-1, this is a response from DMG-2 acknowledging it is willing to accept management of the client. If the delegation was initiated by DMG-2, it is a response from DMG-1 acknowledging if it is willing to delegate management of the client. | Target_Server_ID(s); Target_ID(list); Acknowledgement status; Response_code; Delegation_Parameters; Delegation_Session_ID; | DMG-1-> DMG-2 |
| | | | DMG-2-> DMG-1 |
| SL_Ind_Delegation_Req | Message sent to a DMG with Secondary role from the associated DMS. It indicates that a delegation has been initiated within the ML. The originator may be in either a delegated or delegating server. | Target_Server_ID(s); Target_ID(list); Delegating_MA_ID; Delegated_MA_ID; DM delegated functions list; Access Control Info; Full/Partial Delegation qualifier; Device characteristics; Reason_code; Delegation_Parameters; Delegation_Session_ID | DMG-> DMS |
| SL_Coordinated_Delegation_Req | Message sent to a DMS by its associated Secondary DMG. It indicates that a delegation is initiated in the SL involving this DMS in either delegated or delegating Primary DMS role. | Target_Server_ID(s); Target_ID(list); Delegating_MA_ID; Delegated_MA_ID; DM delegated functions list; Access Control Info; Full/Partial Delegation qualifier; Device characteristics; Reason_code; Delegation_Parameters; Delegation_Session_ID | DMG-> DMS |

**Table 5 Delegation Request Setup Parameters**

| Parameter | Descriptions |
|---|---|
| Originator_Server_ID | Unique ID of the server initiating the message. |
| Destination_Server_ID | Unique ID of the destination server for the message |
| Target_Server_ID | Unique ID of the Primary server(s) involved in the delegation procedure, in coordinated Delegation procedures when the originator and/or destination are not the Primary DMServ. |
| Target_ID(list) | Unique ID of a client or the ID of an already created client group, subject to delegation. |
| | *Alternatively, the Target_ ID may be a list of devices targeted by the delegation request. This is an alternative to using a Target_ ID pointing to a group, if the target devices have not been already grouped.* |
| Delegating_MA_ID | Unique ID for the Management Authority providing DM before delegation |
| Delegated_MA_ID | Unique ID for the Management Authority to provide DM before delegation |
| Device characteristics | List of device characteristics for the client device, e.g. manufacturer, model, etc. |
| Full/Partial Delegation qualifier | Flag indicating if a full or a partial delegation procedure is to be performed. Both Primary DMServs use this parameter in client setup, such that the delegated server will manage only the indicated functionality after the delegation. |
| DM delegated functions list | List of delegated functions to be used in CAD methods involving partial delegation. It may be an enumeration of indicators or RPCs, or in case of Management Objects (e.g. OMA DM M.O.) the URL(s) to the M.O. tree or part of the tree to be delegated. To be used for Partial |
| Access Control information | Access control Information may be used in conjunction with other parameters such as the server IDs, delegated functions list, MA IDs, etc. to determine the appropriate response |
| Acknowledgement Status | Flag used in delegation response messages. If the delegation is initiated byDMServ-1, the flag is used by DMServ-2 to indicate if it is willing to accept the management of the client. If the delegation is initiated by DMServ-2, the flag is used by DMServ-1 to indicate if it is willing to delegate the management of the client. |
| Reason Code | Code indicating the reason for delegation, e.g. offloading, specific procedure, policy, API request, etc. Additional information may be provided in Delegation Parameters. |
| Response Code | Information to be included in the Delegation_Resp message to indicate a positive or negative response to the delegation request. Additional information to qualify the response may be provided in Delegation Parameters. |
| Delegation parameters | Additional information about delegation indicating either parameters used for triggering the request (e.g. CPU load of the delegation initiator, device location, etc.) or parameters to be used in processing the request ( e.g. policy information, client services needed, etc.). In the Delegation_resp message the parameters may qualify the reason for the positive or negative response. |
| Delegation_Session_ID | ID indicating the DM delegation session for which the message applies |

**Table 6 Triggering and processing of Delegation Request Setup messages**

| Messages | Action Descriptions |
|---|---|
| SL_Delegation_Req | A Primary or Secondary DMServ may initiate CAD by sending Delegation Req based on a variety of triggers such as: |
| | - DM application interaction upon request and configuration by the Management Authority, e.g. Administrator API for the DMServ or for the DM services overall, OSS/BSS configuration API, Management authority configuration API, owner and user APIs, etc. |
| | - Information/Status of local resources: e.g. number of devices managed, CPU load or available memory, etc. |
| | - Global information about resources available: e.g. other available DMServs just added to the system or under-loaded, other available DMServs with specific capabilities or serving a specific location, other available DMServs for a given MA, DMServ topology, Service Capabilities of DMServs in the system, etc. |
| | - Information about the specific client managed: e.g. type/model/manufacturer of managed clients, client location, service capabilities, device sleep schedules etc. |
| | - Global information about clients in the system: e.g..topology of client groups based on device characteristics, location, etc., service capabilities associated with all the managed devices, etc. |
| | - Local or global DM policies |
| | Upon the receipt of this message the destination DMServ may use all available information to determine if the delegation request should be accepted or not. |
| SL_Delegation_Resp | A Primary or Secondary DMServ may send this message after the receipt of the Delegation Request to either request accepting management for a client or to request granting of management for the client, and it may be based on: |
| | - Reason code provided in the Delegation_Req |
| | - Information about the client to be delegated, e.g. is it currently managed locally or has it been managed in the past, type/model/manufacturer of managed clients, client location, service capabilities, device sleep schedule ,etc. |
| | - Information/Status of local resources: e.g. number of devices managed, CPU load or available memory, etc. |
| | - Global information about resources available: e.g. other available DMServs just added to the system or under-loaded, other available DMServs with specific capabilities or serving a specific location, other available DMServs for a given MA, DMServ topology, Service Capabilities of DMServs in the system, etc. |
| | - Global information about clients in the system: e.g..topology of client groups based on device characteristics, location, etc., service capabilities associated with all the managed devices, etc. |
| | - Management Authority configuration, e.g. Administrator API for the DMServ or for the DM services overall, OSS/BSS configuration API, Management authority configuration API, owner and user APIs, etc. |
| | - Local or global DM policies |
| SL_Ind_Delegation_Req | A DMS may send this message to its DMG in Secondary role, after the receipt of a Delegation_Req. It indicates that a delegation has been initiated within the ML. The originator may be in either a delegated or delegator server and the message may contain full or partial information about the content of the Delegation_Req message. |
| | Upon the receipt of this message the DMG may update its list of managed devices associated with the DMS in Primary role to include the delegation pending status. |
| SL_Coordinated_Delegation_Req | A DMG in Secondary role may initiate CAD by sending SL_Coordinated_Delegation_Req to a DMS based on: |
| | - DM application interaction upon request and configuration by the Management Authority, e.g. Administrator API for the DMServ or for the DM services overall, OSS/BSS configuration API, Management authority configuration API, owner and user APIs, etc. |
| | - Global information about resources available at DMServs coordinated by SL: Service Capabilities, number of devices managed, location, resources available (CPU load, available memory, etc.), new DMServs just added to the system or under-loaded, system topology, global policies etc. |
| | - SL information about the specific client to be delegated: e.g. type/model/manufacturer of managed clients, client location, service capabilities, local policies, device sleep schedule, etc. |
| | - Global information about clients in the system: e.g..topology of client groups based on device characteristics, location, etc., service capabilities associated with all the managed devices, etc. |
| | Upon the receipt of this message the DMS may use all available information to determine if the delegation request should be accepted or not. |

Table 7 shows Delegation Preparation messages. These messages may be exchanged either during the Client Bootstrap configuration (Step 2) or during Client Preparation completion (Step 4) in CAD as described above , depending if Option A or B have been chosen . Further IE information is provided in Table 8 (for IE's not yet defined) and triggering and processing information is provided in Table 9.

In table 8, the MgmtObjReturnFlag flag and the following MgmtObjInfo can be used to optimize OMA DM v 1.3 (deployment type E) by forwarding to the new server DM information which has been stored at the old server.

**Table 7 Client Bootstrap and Preparation completion messages**

| Message Name | Description | Key Parameters | Originator /Destination |
|---|---|---|---|
| SL_Delegation_Setup_Req | Message between DMGs in Primary role, to request setup information. The message may indicate a specific information type request (bootstrap URL vs. account information) or it may let DMG-2 chose the setup type | Target_Server_ID(s); Target_ID(list); Delegation_Session_ID; | DMG-1-> DMG-2 |
| SL_Delegation_Setup_Ind | Message sent to the delegating Primary DMServ from the delegated Primary DMServ. It indicates if the client has already been bootstrapped or not. Depending on the setup option A or B, DMServ -2 may include additional account information. | Target_Server_ID(s); Target_ID(list); Bootstrap_Status; Delegated_Server_Info_Type; Delegated_Server_Info ; Delegation_Session_ID; DM_Session_Init_Flag; DM_Session_Preferences; DMS_Session_Account_Info; DM_Session_Access_info; DM_Session_Conn_Preferences; MgmtObjReturnFlag; RegistrationFlag; | DMG-2-> DMG-1 |
| | | | DMG-1-> DMS-1 |
| SL_Delegation_Prepared | Message sent between Primary DMServs to signal that the client preparation has been completed. May be used in either Option A. or Option B. | Target_ID(list); Delegation_Session_ID; MgmtObjInfo; RegistrationInfo; | DMG-1-> DMG-2 |
| | | | DMS-> DMG |
| Bootstrap_Setup | Message sent by the Primary DMServ-1 to the client to configure the bootstrap server for DMG-2 in Option B. | Delegation_Session_ID; BootstrapURL; Delegated_Server_ID ; | DMG-1-> DMC |
| Account_Setup | Message sent by the Primary DMserv-1 to the client to configure the account information of DMG-2 and to update the Access control List in Option A. | DM_session_init_flag; Delegation_Session_ID; | DMG-1-> DMC |
| ACL_Update | Message sent by the Primary DMServ-1 to the client to update the Access control List | DM_session_init_flag; Delegation_Session_ID | DMG-1-> DMC |

**Table 8 Client Bootstrap and Preparation Completion Parameters**

| Parameter | Descriptions |
|---|---|
| Bootstrap_Status; | Flag indicating "Client bootstrapped", or "Client Not Bootstrapped". It may be used together with the Delegated DMServ info to provide the Delegating DMServ information needed to configure the client and what type of Delegation Preparation procedure to follow. |
| Delegated_Server_Info_Type | If Bootstrap_Status is "Client Not Bootstrapped", indicates what type of information is provided for the delegated server, e.g. account information, bootstrapping server information, etc. |
| Delegated_Server_Info | Information provided by DMServ-2 to DMServ-1 for configuration of the client. If Bootstrap Status is "Client Not Bootstrapped", the delegated server information may be a choice of formats depending on Delegated_Server_Info_Type. |
| DM_Session_Init_Flag | Flag used in client setup and ACL update to indicate if it should initiate a DM session with the delegated server |
| DM_Session_Preferences | List of preferences to be used in establishing a session e.g. binding type (http, etc.), port number, authentication type |
| DM_Session_Account_info | If the client should establish a session, which account information to use |
| DM_Session_Access_Info | If the client should establish a session, security related information such as user name and password to initiate the session |
| DM_Session_Connection_Pref | Optional, if the client should establish a session, connection preferences to be used e.g. WLAN preferred, etc. |
| MgmtObjReturnFlag | Flag indicating if DMServ-1 should return Management Object resource content or information with the SL_Delegation_Prepared message |
| MgmtObjInfo | Information about the content of Management Object resources available at DMServ-1 for the client for the functionality which is transferred to DMServ-2. This may not be the full Management Object tree if the delegation is partial. |
| RegistrationFlag | Flag indicating if DMServ-1 should return client registration information or trigger de-registration |
| RegistrationInfo | Information or content of resources available at DMServ-1 for the client registration. |

**Table 9 Triggering and processing of Client Bootstrap and Preparation messages**

| Messages | Action Descriptions |
|---|---|
| SL_Delegation_Setup_Req | DMServ-1 may send Delegation_Setup_Req to DMServ-2 in order to request delegation setup information. The message might indicate a specific information type requested, such as account information or bootstrap server URL, or let DMServ-2 to provide the information type. |
| SL_Delegation_Setup_Ind | When used after a successful delegation request/response, DMServ-2 may inform DMServ-1 about the bootstrap status of the client and provide corresponding delegation information. DMServ-2 may choose different types of configuration information to provide, e.g. account info, bootstrap URL, etc. |
| | Upon receipt of the message, if bootstrap status is "Client Not bootstrapped", DMServ-1 will determine the type of bootstrap procedure to follow. For example, given account information, it may send Account_Setup and ACL_Update messages to the DM client and a Delegation_Prepared message to DMServ-2 to confirm the configuration. |
| | Upon receipt of the message, if bootstrap status is "Client bootstrapped", DMServ-1 may check the status of the delegation procedure and in Delegation Preparation Completion step (bootstrap option), will send ACL_Update message to the client, then send Delegation Prepared message back to DMServ-2 |
| SL_Delegation_Prepared | Message sent by DMServ-1 to DMServ-2 to signal that the client preparation has been completed. May be used in either Option A. or Option B. Depending on the RegistrationFlag received in SL_Delegation_Setup_Ind it may contain client registration information and depending on the MgmtObjReturnFlag it may contain contents of the client Management Objects in DMServ-1. Also depending on RegistrationFlag the client prepared status may include the successful de-registration of the client at DMServ-1 and its registration with DMServ-2 |
| Bootstrap_Setup | DMServ-1 sends this message in order to provide the client with bootstrap server information for the delegated server. Following this message the client will perform the bootstrap procedure and, if successful, will initiate a DM session with the delegated server. |
| Account_Setup | DMServ-1 sends this message in order to update the client with account information for DMServ-2. Following this message the client will initiate a DM session with the delegated server, unless directed not to. |
| ACL_Update | DMServ-1 sends this message in order to update the ACL list in the client. |

Table 10 shows DM Session initiation messages. These messages may be exchanged during the DM session initiation (CAD Step 3). Further parameter information is provided in Table 11 (for parameters not yet defined) and triggering and processing information is provided in Table 12.

**Table 10 DM Session initiation messages**

| Message Name | Description | Key Parameters | Originator /Destination |
|---|---|---|---|
| SL_DM_session_ind | Message establishing a new SL DM session between the Client and DMG-2 | SL_DM_Session_ID; Session_cause_purpose; Initiator_type_and_ID; Interaction_type; Vendor_info; | Client DMG->DMG-2 |
| | | | DMG-2->Client DMG |
| SL_Ind_DM_session_ind | Message sent indicating that a DM session between DMServ-2 and DM client has been established (either in SL or ML) upon initiation from either side | Originator_Server_ID; Destination_Server_ID; Session_Client_ID; Session_Server_ID; SL_DM_Session_ID; Session_cause_purpose; Initiator type and ID; Interaction_type; Vendor info; | DMS-2-> DMG-2 |
| | | | DMG-2-> DMG-1 |

**Table 11 DM Session initiation parameters**

| Parameter | Descriptions |
|---|---|
| Session_Client_ID | ID of client in the SL DM session |
| Session_Server_ID | ID of server in the SL DM session |
| Account_id | ID of the account provided |
| Session_cause_purpose | Indicators for cause or purpose of the session, e.g. initial connection, management session, delegation, etc. |
| Initiator_type_and_ID | Type of initiator of DM command to be executed, DM client or server, and associated ID |
| Interaction_type | Informational, DM command, Background DM command, User prompt, etc. |
| Vendor_info | Vendor specific information, may include entity information such as model, number, etc. |
| Access_Info | Security related information such as user name and password to initiate the session |
| Session_preferences | Preferences to be used for the remainder of the current session e.g. authentication type, etc. |
| Next_session_preferences | Preferences to be used for the future sessions e.g. authentication type, etc. |
| Next_session_connection_pref | Connection preferences to be used in future sessions, e.g. WLAN preferred, etc. |

**Table 12 Triggering and processing of DM Session initiation messages**

| Messages | Action Descriptions |
|---|---|
| SL_DM_session_ind | Message establishing a new SL DM session between the client and DMG-2. |
| | The client initiates a DM Session with this message after successfully performing bootstrap based on the bootstrap URL provided. |
| | DMG-2 initiates a DM Session with this message after receiving a Delegation_Prepared message, if a session has not been already initiated by the client |
| SL_Ind_DM_session_ind | This message is triggered by a DM session having been established between DMServ-2 and the client, wither in SL or ML. |
| | Upon receipt a DMServ will be able to update its status for the given client to reflect the fact that a session with the delegated server has been established. A DMServ will then expect a Delegation Completion message in order to finalize the delegation procedure. |

Table 13 shows Delegation Completion messages. These messages may be exchanged during Delegation Completion (CAD Step 5). All parameter information is provided in the sections above, and triggering and processing information is provided in Table 14.

**Table 13 Delegation Completion messages**

| Message Name | Description | Key Parameters | Originator/Destination |
|---|---|---|---|
| SL_Delegation_Complete | Message from DMG-2 to DMSG-1 indicating that the CAD procedure is complete | Originator_Server_ID; Destination_Server_ID; Target_ID(list); Delegation_Session_ID ; | DMG-2-> DMG-1 |
| SL_Ind_Delegation_Complete | Message to confirm sending/receiving of Delegation Complete messages | Originator_Server_ID; Destination_Server_ID; Target_ID(list); Delegation_Session_ID ; | DMS-> DMG |
| | | | DMG-> DMS |

**Table 14 Triggering and processing of Delegation Completion messages**

| Messages | Action Descriptions |
|---|---|
| SL_Delegation_Complete | This message is triggered after DM session has been established between the client and DMG-2 to indicate to DMServ-1 that the delegation is completed. |
| SL_Ind_Delegation_Complete | This message is triggered to indicate to the other layer that a Delegation Complete message has been exchanged. |

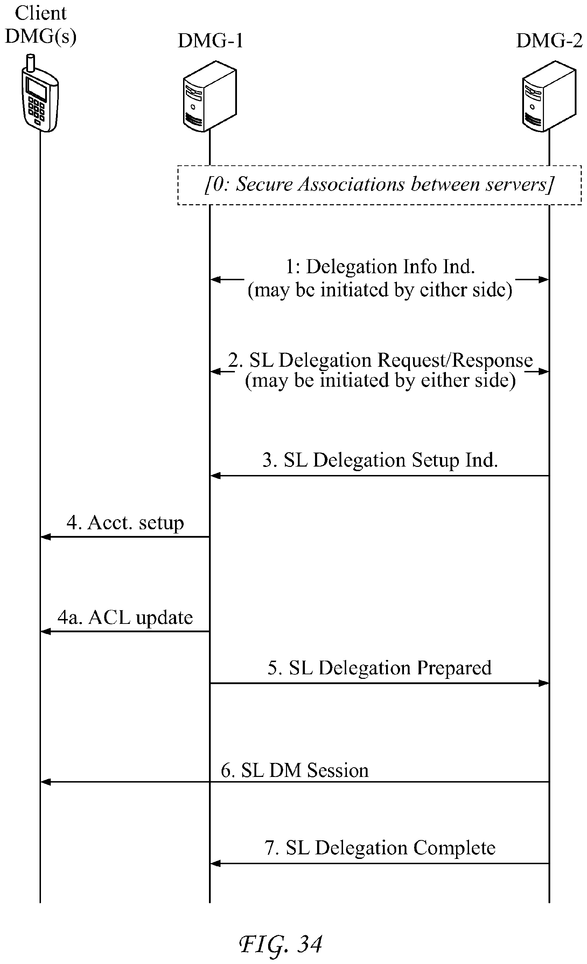

Figure 34 is a flow diagram that illustrates an instantiation of the generalized deployment type A as an oneM2M embodiment using SL only Device Management. The relevant messages and parameters from above apply.

The Client DMG (DMG-C) resides in an ASN-CSE, while the delegating IN-CSE-1 includes DMG-1 CSF and the delegated IN-CSE-2 includes DMG-2 CSF. In order for the device to be managed by DMG-1 it must register with IN-CSE-1. At registration IN-CSE-1 creates a resource of type <remoteCSE> under <*CSEbase-1>* for the given device, in this case the *<remoteCSE-C>* instance. Similarly upon registration between IN-CSE-2 to IN-CSE-1 the *<remoteCSE-2>* instance is created. Secure associations between IN-CSEs are assumed.

*<CSEbase-1>* also has a child of type <node>, namely *<node-1>* which has the management Objects of the devices to be managed as children. Finally, IN-CSE-1 may create < *DMGAccountBase-1>* resource instance which has as children all the accounts of the DMG.

When Delegation_Info_Ind is initiated or received, each IN-CSE may create resources of type <delegationInfo> in order to store locally information needed for CAD, in this case <*delegationInfo-1*> and <*delegationInfo-2*> respectively. This information enables algorithms for device load balancing which in turn trigger the SL_Delegation_Request/Response pair.

When the delegation for a managed device is triggered IN-CSE-1 creates an instance of <clientAuthDelegation> resource type for each managed client in the CAD procedure, in this case <*clientAuthDelegation1-DMG-C*>.

The decision to accept a delegation may be based on exchanged parameters such as delegation reason, CPU load of the delegation initiator, device location, policy information, client services needed, etc. at this point IN-CSE-2 may also create an instance of <clientAuthDelegation> resource type for each managed client in the CAD procedure, in this case *<clientAuthDelegation2-DMG-*C>.

The delegated server sends information to the delegating server via the SL_Delegation_Setup_Ind, which may be triggered by a SL_Delegation_Setup_Req message. The parameters included provide the information needed to set up the client and be able ultimately to start a DM session between the delegated DMG and the client, so that the first DM session established can use the settings and preferences exchanged here, such as: binding type (http, etc.), port number, authentication type, user name and password, connection preference (WLAN, etc.)

Based on parameters included in SL_Delegation_Setup_Ind, the de-registration of the client device at IN-CSE-1 and its re-registration at IN-CSE-2 may be triggered. In another embodiment, the registration information is provided by IN-CSE-1 to IN-CSE-2 in the SL_Delegation_Prepared message. Also based on these parameters IN-CSE-1 knows which client configuration method to use, in this case Account setup and ACL update, so that it sends the corresponding messages to the DMG-C.

When the client is set-up, in this case using the Account Setup and ACL_Update messages, DMG-1 considers the client prepared and sends the SL_client_prepared message to DMG-2. At this point the client device is also registered with DMG-2 and the DM session is initiated using the parameters exchanged. After the successful establishment of the session DMG-2 sends SL_Delegation_Complete message, at which point, DMG-2 has full or partial management authority over the client, according to the request.

The ClientAuthDelegation resource to be used in oneM2M CAD includes the attributes provided in Table 15.

**Table 15 ClientAuthDelegation resource attributes**

| Attribute | Description |
|---|---|
| Target_DMG-C | Address of the DMG in the managed client |
| Target_DMG | Address of the delegating DMG |
| Target_DMS | Address of the delegating DMS |
| Delegation_Duration | Duration for which the delegation is active |
| Delegation_Reason | Delegation purpose |
| Account_root_location | Link to the DMGAccountBase |

The DMGAccountBase resource to be used in CAD has as children <DMGAccount> resources for each Account of the DMG.

The DMGAccount resource to be used in CAD based on account updates (Option A) includes the attributes provided in Table 16.

**Table 16 DMGAccount resource attributes**

| Attribute | Description |
|---|---|
| Account_root_location | Location of the AccoutInfo resources for all accounts in the client |
| Account_ID | Identifier for the specific account |
| DMServ_ID | Identifier for the DMServ providing management |
| DMServ_Name | Optional DMServ name |
| DM_App_info | Information for the DM application running on the DMServ, e.g. Address (e.g. URI, IPv4), Port, etc. |
| Access_Info | Security related information such as user name and password to initiate the session |
| Session_Preferences | Preferences to be used for the remainder of the current session e.g. authentication type, etc. |
| Session_Connection_Pref | Connection preferences to be used in future sessions, e.g. WLAN preferred, etc. |

The DelegationInfo resource to be used in CAD for Delegation Information, with attributes provided in Table 17.

**Table 17 DelegationInfo resource attributes**

| Attribute | Description |
|---|---|
| Local_Ind_Params_List | List of parameters (Ind_Params_List) collected locally to be provided in delegation information messages includes all parameters in Table 2. |
| Neighbor_Ind_Params_List | List of parameters (Ind_Params_List) received via delegation information messages, (includes all parameters in Table 2) about its neighbors |
| Last_Delegation | Information on the last delegation(s) performed, may include time it was performed, full or partial parameter information, etc. |

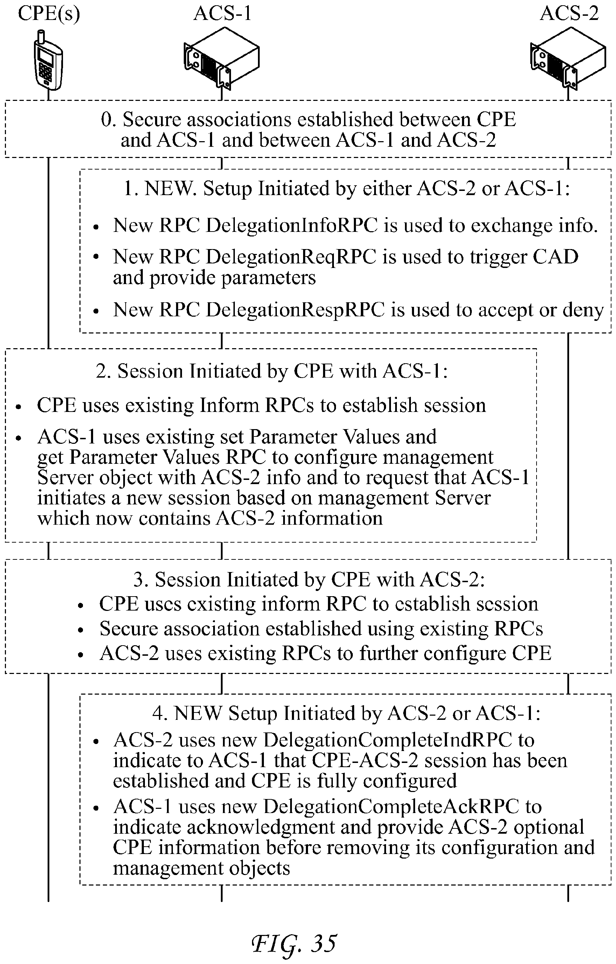

Figure 35 is a flow diagram of a BBF embodiment of a ML based CAD with deployment type E. Currently BBF specifications do not make provisions for CAD procedures or inter ACS communications (ACS is the BBF equivalent of the DMS for the purpose of this discussion). Providing CAD functionality is an important use-case for the introduction of such interfaces. As such, the following embodiment of a CAD procedure in BBF is proposed.

In BBF the interactions between ACS and the client (CPE is the BBF equivalent of DMC) are provided via RPC calls. The following flow illustrates the use of existing RPCs, along with new ones, in order to provide CAD functionality in BBF. The newly introduced RPCs are described in Table 18. Parameters have been introduced above.

Note that steps 2 and 3 which contain interactions with the CPE may be instantiated repeatedly if the target of the delegation is a list of devices (see Target ID).

**Table 18 BBF Delegation RPCs**

| RPC Name | Description | Key Arguments | Originator/Destination |
|---|---|---|---|
| DelegationInfoRPC | RPC used to retrieve delegation related information, which is provided in Indication_Parameters. This RPC may be triggered by any device load balancing algorithms, etc. | Request_ind; Request_bitfield; Indication_bitfield; Indication_Parameters; | ACS -2-> ACS -1 |
| | | | ACS -1-> ACS -2 |
| | Based on the information provided in this RPC a DelegationReqRPC may me initiated, or the delegation response in DelegationRespRPC may be determined | | |
| | The RPC may be used either to request data to be collected or provided using request bitfield, or to provide values for the parameters in Indication Parameters | | |
| DelegationReqRPC | RPC used for delegation request. It may be initiated by either ACS to request granting or accepting of the management responsibility. | Target_ID(list); Delegated_Server_Info ; Delegation_Session_ID; Delegating_MA_ID; Delegated_MA_ID; DM delegated functions list; Device characteristics; Reason_code; Delegation_Parameters; Delegation_Session_ID; DM Session_Preferences; DM_Session_Account_Info; DM_Session_access_info; DM_Session_Conn_Preferences; | ACS -2-> ACS -1 |
| | Along with information from GetDelegationInfoRPC, the following attributes may be used to determine if delegation should be granted: | | ACS -1-> ACS -2 |
| | • Delegated_Server_Info, Delegating_MA_ID; Delegated_MA_ID; | | |
| | • DM delegated functions list; | | |
| | • Device characteristics; | | |
| | • Reason_code; | | |
| | The following attributes may be used by ACS-1, if delegation is granted, to configure the CPE during a next session with ACS-2 specific information: | | |
| | • Delegation_Parameters; | | |
| | • Delegation_Session_ID; | | |
| | • DM_Session_Preference s; | | |
| | • DM_Session_Account_Info; | | |
| | • DM_Session_access_info; | | |
| | • DM_Session_Conn_Preferences; | | |
| DelegationRespRPC | Response RPC to a delegation initiation, accepting or granting management responsibility. | Target_ID(list); Acknowledgement status; Response_code; Delegation_Parameters; Delegation_Session_ID; | ACS -2-> ACS -1 |
| | The response code may be dependent on the attributes provided in DelegationReqRPC | | ACS -1-> ACS -2 |
| DelegationComplete IndRPC | RPC used by ACS -2 to indicate that the CPE has successfully initiated a session during which ACS-2 configuration of CPE based on the delegation was finalized. | Target_ID(list); Delegation_Session_ID; MgmtObjReturnFlag; | ACS -2-> ACS -1 |
| Delegationcomplete AckRPC | Response RPC used by ACS-1 to indicate that ACS-1 considers delegation now complete. | Target_ID(list); Response_code; Delegation_Session_ID; MgmtObjInformaton; | ACS -1-> ACS -2 |
| | Depending on MgmtObjReturnFlag ACS-1 may return CPE management object information to ACS-2. | | |

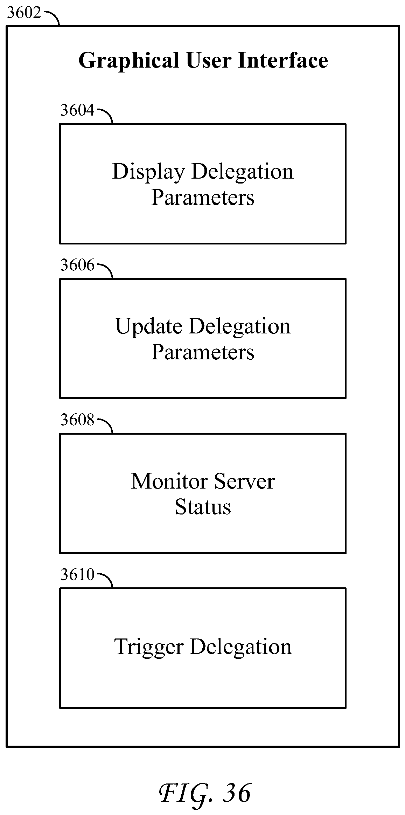

Interfaces, such as Graphical User Interfaces (GUIs), can be used to assist user to control and/or configure functionalities related to the layered management delegation. Figure 36 is a diagram that illustrates an interface 3602 that allows a user to display delegation parameters 3604 and to update delegation parameters 3606. Exemplary delegation parameters can include those discussed above with respect to Tables 2 and 6. Parameters can include technology (OMA or BBF), allowed delegation service type (service layer server, management layer server) allowed delegation type, reason codes, trusted management authority lists, access control, delegation initiation thresholds, delegation acceptance parameters and any other relevant delegation parameter. The Monitor Server Status 1308 function can be used to monitor server status including CPU load. Trigger Delegation 3610 button can be used to manually trigger delegation between two known servers. It is to be understood that interface 3602 can be produced using displays such as those shown in Figures 37C-D described below.

### Example M2M/IoT/WoT Communication System

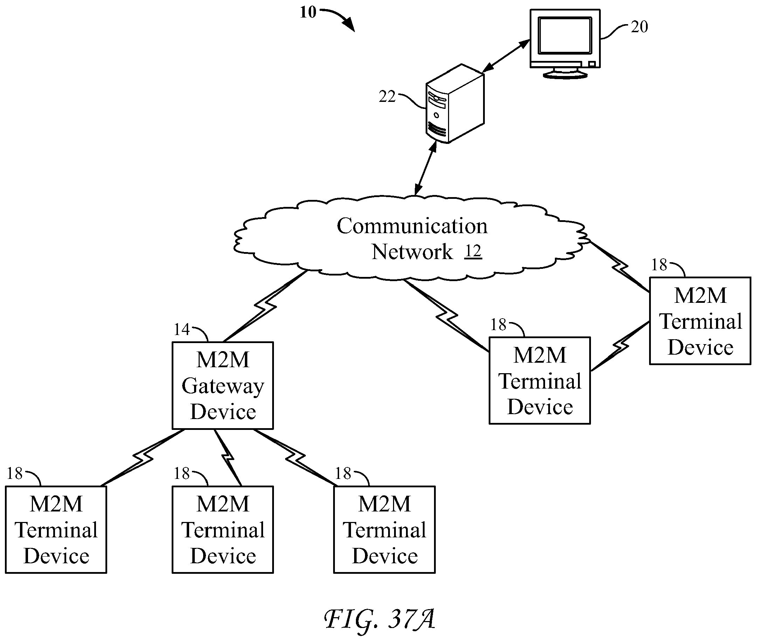

Figure 37A is a diagram of an example machine-to machine (M2M), Internet of Things (IoT), or Web of Things (WoT) communication system 10 in which one or more disclosed embodiments may be implemented. Generally, M2M technologies provide building blocks for the IoT/WoT, and any M2M device, M2M gateway, M2M server, or M2M service platform may be a component or node of the IoT/WoT as well as an IoT/WoT service layer, etc. Communication system 10 can be used to implement functionality of the disclosed embodiments and can include functionality and logical entities such those illustrated in Figures 8-16 and 18-35 including device management servers, including DMGs and DMSs, as well as logical entities to produce the user interfaces such as GUI 3602.

As shown in Figure 37A, the M2M/ IoT/WoT communication system 10 includes a communication network 12. The communication network 12 may be a fixed network (e.g., Ethernet, Fiber, ISDN, PLC, or the like) or a wireless network (e.g., WLAN, cellular, or the like) or a network of heterogeneous networks. For example, the communication network 12 may be comprised of multiple access networks that provide content such as voice, data, video, messaging, broadcast, or the like to multiple users. For example, the communication network 12 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like. Further, the communication network 12 may comprise other networks such as a core network, the Internet, a sensor network, an industrial control network, a personal area network, a fused personal network, a satellite network, a home network, or an enterprise network for example.

As shown in Figure 37A, the M2M/ IoT/WoT communication system 10 may include the Infrastructure Domain and the Field Domain. The Infrastructure Domain refers to the network side of the end-to-end M2M deployment, and the Field Domain refers to the area networks, usually behind an M2M gateway. The Field Domain and Infrastructure Domain may both comprise a variety of different network nodes (e.g., servers, gateways, device, and the like). For example, the Field Domain may include M2M gateways 14 and terminal devices 18. It will be appreciated that any number of M2M gateway devices 14 and M2M terminal devices 18 may be included in the M2M/ IoT/WoT communication system 10 as desired. Each of the M2M gateway devices 14 and M2M terminal devices 18 are configured to transmit and receive signals, using communications circuitry, via the communication network 12 or direct radio link. A M2M gateway 14 allows wireless M2M devices (e.g. cellular and non-cellular) as well as fixed network M2M devices (e.g., PLC) to communicate either through operator networks, such as the communication network 12 or direct radio link. For example, the M2M terminal devices 18 may collect data and send the data, via the communication network 12 or direct radio link, to an M2M application 20 or other M2M devices 18. The M2M terminal devices 18 may also receive data from the M2M application 20 or an M2M terminal device 18. Further, data and signals may be sent to and received from the M2M application 20 via an M2M service layer 22, as described below. M2M terminal devices 18 and gateways 14 may communicate via various networks including, cellular, WLAN, WPAN (e.g., Zigbee, 6LoWPAN, Bluetooth), direct radio link, and wireline for example.

Exemplary M2M terminal devices 18 include, but are not limited to, tablets, smart phones, medical devices, temperature and weather monitors, connected cars, smart meters, game consoles, personal digital assistants, health and fitness monitors, lights, thermostats, appliances, garage doors and other actuator-based devices, security devices, and smart outlets.

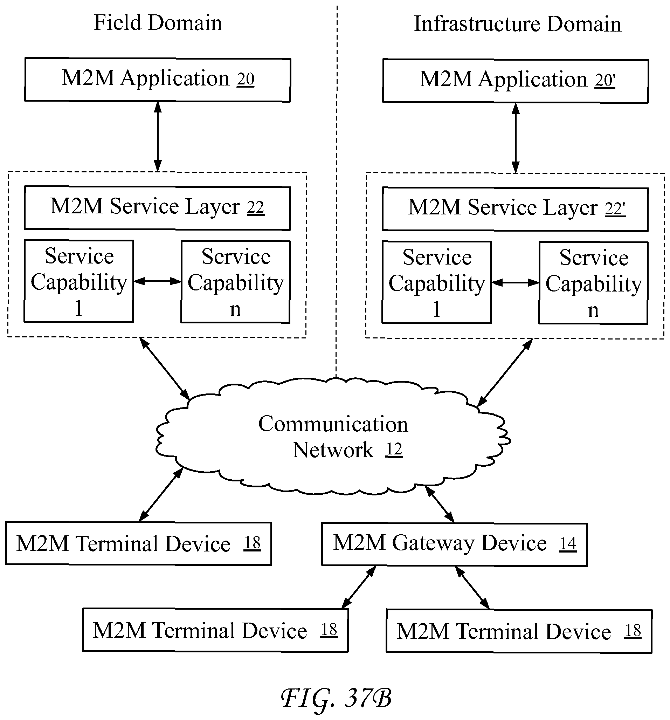

Referring to Figure 37B, the illustrated M2M service layer 22 in the field domain provides services for the M2M application 20, M2M gateway devices 14, and M2M terminal devices 18 and the communication network 12. Communication network 12 can be used to implement functionality of the disclosed embodiments and can include functionality and logical entities such those illustrated in Figures 8-16 and 18-35 including device management servers, including DMGs and DMSs, as well as logical entities to produce the user interfaces such as GUI 3602. The M2M service layer 22 may be implemented by one or more servers, computers, devices, virtual machines (e.g. cloud/ storage farms, etc.) or the like, including for example the devices illustrated in figures 37C and 37D described below. It will be understood that the M2M service layer 22 may communicate with any number of M2M applications, M2M gateways 14, M2M terminal devices 18, and communication networks 12 as desired. The M2M service layer 22 may be implemented by one or more nodes of the network, which may comprises servers, computers, devices, or the like. The M2M service layer 22 provides service capabilities that apply to M2M terminal devices 18, M2M gateways 14, and M2M applications 20. The functions of the M2M service layer 22 may be implemented in a variety of ways, for example as a web server, in the cellular core network, in the cloud, etc.

Similar to the illustrated M2M service layer 22, there is the M2M service layer 22' in the Infrastructure Domain. M2M service layer 22' provides services for the M2M application 20' and the underlying communication network 12' in the infrastructure domain. M2M service layer 22' also provides services for the M2M gateways 14 and M2M terminal devices 18 in the field domain. It will be understood that the M2M service layer 22' may communicate with any number of M2M applications, M2M gateways and M2M devices. The M2M service layer 22' may interact with a service layer by a different service provider. The M2M service layer 22' by one or more nodes of the network, which may comprises servers, computers, devices, virtual machines (e.g., cloud computing/storage farms, etc.) or the like.

Referring also to Figure 37B, the M2M service layers 22 and 22' provide a core set of service delivery capabilities that diverse applications and verticals can leverage. These service capabilities enable M2M applications 20 and 20' to interact with devices and perform functions such as data collection, data analysis, device management, security, billing, service/device discovery etc. Essentially, these service capabilities free the applications of the burden of implementing these functionalities, thus simplifying application development and reducing cost and time to market. The service layers 22 and 22' also enable M2M applications 20 and 20' to communicate through various networks 12 and 12' in connection with the services that the service layers 22 and 22' provide.

The methods of the present application may be implemented as part of a service layer 22 and 22'. The service layer 22 and 22' is a software middleware layer that supports value-added service capabilities through a set of Application Programming Interfaces (APIs) and underlying networking interfaces. Both ETSI M2M and oneM2M use a service layer that may contain the connection methods of the present application. ETSI M2M's service layer is referred to as the Service Capability Layer (SCL). The SCL may be implemented within an M2M device (where it is referred to as a device SCL (DSCL)), a gateway (where it is referred to as a gateway SCL (GSCL)) and/or a network node (where it is referred to as a network SCL (NSCL)). The oneM2M service layer supports a set of Common Service Functions (CSFs) (i.e. service capabilities). An instantiation of a set of one or more particular types of CSFs is referred to as a Common Services Entity (CSE) which can be hosted on different types of network nodes (e.g. infrastructure node, middle node, application-specific node). Further, connection methods of the present application can implemented as part of an M2M network that uses a Service Oriented Architecture (SOA) and/or a resource-oriented architecture (ROA) to access services such as the connection methods of the present application.

In some embodiments, M2M applications 20 and 20' may be used in conjunction with the disclosed systems and methods.. The M2M applications 20 and 20' may include the applications that interact with the UE or gateway and may also be used in conjunction with other disclosed systems and methods.

In one embodiment, the logical entities such those illustrated in Figures 8-16 and 18-35 including device management servers, including DMGs and DMSs, as well as logical entities to produce the user interfaces such as GUI 3602 may be hosted within a M2M service layer instance hosted by an M2M node, such as an M2M server, M2M gateway, or M2M device, as shown in Figure 37B. For example, the logical entities such those illustrated in Figures 8-16 and 18-35 including device management servers, including DMGs and DMSs, as well as logical entities to produce the user interfaces such as GUI 3602 may comprise an individual service capability within the M2M service layer instance or as a sub-function within an existing service capability.

The M2M applications 20 and 20' may include applications in various industries such as, without limitation, transportation, health and wellness, connected home, energy management, asset tracking, and security and surveillance. As mentioned above, the M2M service layer, running across the devices, gateways, servers and other nodes of the system, supports functions such as, for example, data collection, device management, security, billing, location tracking/geofencing, device/service discovery, and legacy systems integration, and provides these functions as services to the M2M applications 20 and 20'.

Generally, the service layers 22 and 22' define a software middleware layer that supports value-added service capabilities through a set of Application Programming Interfaces (APIs) and underlying networking interfaces. Both the ETSI M2M and oneM2M architectures define a service layer. ETSI M2M's service layer is referred to as the Service Capability Layer (SCL). The SCL may be implemented in a variety of different nodes of the ETSI M2M architecture. For example, an instance of the service layer may be implemented within an M2M device (where it is referred to as a device SCL (DSCL)), a gateway (where it is referred to as a gateway SCL (GSCL)) and/or a network node (where it is referred to as a network SCL (NSCL)). The oneM2M service layer supports a set of Common Service Functions (CSFs) (i.e., service capabilities). An instantiation of a set of one or more particular types of CSFs is referred to as a Common Services Entity (CSE) which can be hosted on different types of network nodes (e.g. infrastructure node, middle node, application-specific node). The Third Generation Partnership Project (3GPP) has also defined an architecture for machine-type communications (MTC). In that architecture, the service layer, and the service capabilities it provides, are implemented as part of a Service Capability Server (SCS). Whether embodied in a DSCL, GSCL, or NSCL of the ETSI M2M architecture, in a Service Capability Server (SCS) of the 3GPP MTC architecture, in a CSF or CSE of the oneM2M architecture, or in some other node of a network, an instance of the service layer may be implemented as a logical entity (e.g., software, computer-executable instructions, and the like) executing either on one or more standalone nodes in the network, including servers, computers, and other computing devices or nodes, or as part of one or more existing nodes. As an example, an instance of a service layer or component thereof may be implemented in the form of software running on a network node (e.g., server, computer, gateway, device or the like) having the general architecture illustrated in Figure 37C or Figure 37D described below.

Further, logical entities of the present application such those illustrated in Figures 8-16 and 18-35 including device management servers, including DMGs and DMSs, as well as logical entities to produce the user interfaces such as GUI 3602 can implemented as part of an M2M network that uses a Service Oriented Architecture (SOA) and/or a Resource-Oriented Architecture (ROA) to access services of the present application.

Figure 37C is a block diagram of an example hardware/software architecture of a M2M network node 30, such as an M2M device 18, an M2M gateway 14, an M2M server, or the like. The node 30 can execute or include logical entities such those illustrated in Figures 8-16 and 18-35 including device management servers, including DMGs and DMSs, as well as logical entities to produce the user interfaces such as GUI 3602. The device 30 can be part of an M2M network as shown in Figure 37A-B or part of a non-M2M network. As shown in Figure 37C, the M2M node 30 may include a processor 32, non-removable memory 44, removable memory 46, a speaker/microphone 38, a keypad 40, a display, touchpad, and/or indicators 42, a power source 48, a global positioning system (GPS) chipset 50, and other peripherals 52. The node 30 may also include communication circuitry, such as a transceiver 34 and a transmit/receive element 36. It will be appreciated that the M2M node 30 may include any sub-combination of the foregoing elements while remaining consistent with an embodiment. This node may be a node that implements the SMSF functionality described herein.

The processor 32 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., memory 44 and/or memory 46) of the node in order to perform the various required functions of the node. For example, the processor 32 may perform signal coding, data processing, power control, input/output processing, and/or any other functionality that enables the M2M node 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer for example.

As shown in Figure 37C, the processor 32 is coupled to its communication circuitry (e.g., transceiver 34 and transmit/receive element 36). The processor 32, through the execution of computer executable instructions, may control the communication circuitry in order to cause the node 30 to communicate with other nodes via the network to which it is connected. In particular, the processor 32 may control the communication circuitry in order to perform the transmitting and receiving steps described herein and in the claims. While Figure 37C depicts the processor 32 and the transceiver 34 as separate components, it will be appreciated that the processor 32 and the transceiver 34 may be integrated together in an electronic package or chip.

The transmit/receive element 36 may be configured to transmit signals to, or receive signals from, other M2M nodes, including M2M servers, gateways, device, and the like. For example, in an embodiment, the transmit/receive element 36 may be an antenna configured to transmit and/or receive RF signals. The transmit/receive element 36 may support various networks and air interfaces, such as WLAN, WPAN, cellular, and the like. In an embodiment, the transmit/receive element 36 may be an emitter/detector configured to transmit and/or receive IR, UV, or visible light signals, for example. In yet another embodiment, the transmit/receive element 36 may be configured to transmit and receive both RF and light signals. It will be appreciated that the transmit/receive element 36 may be configured to transmit and/or receive any combination of wireless or wired signals.

In addition, although the transmit/receive element 36 is depicted in Figure 37C as a single element, the M2M node 30 may include any number of transmit/receive elements 36. More specifically, the M2M node 30 may employ MIMO technology. Thus, in an embodiment, the M2M node 30 may include two or more transmit/receive elements 36 (e.g., multiple antennas) for transmitting and receiving wireless signals.

The transceiver 34 may be configured to modulate the signals that are to be transmitted by the transmit/receive element 36 and to demodulate the signals that are received by the transmit/receive element 36. As noted above, the M2M node 30 may have multi-mode capabilities. Thus, the transceiver 34 may include multiple transceivers for enabling the M2M node 30 to communicate via multiple RATs, such as UTRA and IEEE 802.11, for example.

The processor 32 may access information from, and store data in, any type of suitable memory, such as the non-removable memory 44 and/or the removable memory 46. For example, the processor 32 may store session context in its memory, as described above. The non-removable memory 44 may include random-access memory (RAM), read-only memory (ROM), a hard disk, or any other type of memory storage device. The removable memory 46 may include a subscriber identity module (SIM) card, a memory stick, a secure digital (SD) memory card, and the like. In other embodiments, the processor 32 may access information from, and store data in, memory that is not physically located on the M2M node 30, such as on a server or a home computer. The processor 32 may be configured to control lighting patterns, images, or colors on the display or indicators 42 to reflect the status of an M2M service layer session migration or sharing or to obtain input from a user or display information to a user about the node's session migration or sharing capabilities or settings. In another example, the display may show information with regard to a session state. The current disclosure defines a RESTful user/application API in the oneM2M embodiment. A graphical user interface, which may be shown on the display, may be layered on top of the API to allow a user to interactively establish and manage an E2E session, or the migration or sharing thereof, via the underlying service layer session functionality described herein.

The processor 32 may receive power from the power source 48, and may be configured to distribute and/or control the power to the other components in the M2M node 30. The power source 48 may be any suitable device for powering the M2M node 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 32 may also be coupled to the GPS chipset 50, which is configured to provide location information (e.g., longitude and latitude) regarding the current location of the M2M node 30. It will be appreciated that the M2M node 30 may acquire location information by way of any suitable location-determination method while remaining consistent with an embodiment.

The processor 32 may further be coupled to other peripherals 52, which may include one or more software and/or hardware modules that provide additional features, functionality and/or wired or wireless connectivity. For example, the peripherals 52 may include an accelerometer, an e-compass, a satellite transceiver, a sensor, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

Figure 37D is a block diagram of an exemplary computing system 90 which may also be used to implement one or more nodes of an M2M network, such as an M2M server, gateway, device, or other node. Computing system 90 may comprise a computer or server and may be controlled primarily by computer readable instructions, which may be in the form of software, wherever, or by whatever means such software is stored or accessed. Computing system 90 can execute or include logical entities such those illustrated in Figures 8-16 and 18-35 including device management servers, including DMGs and DMSs, as well as logical entities to produce the user interfaces such as GUI 3602. Computing system 90 can be an M2M device, user equipment, gateway, UE/GW or any other nodes including nodes of the mobile care network, service layer network application provider, terminal device 18 or an M2M gateway device 14 for example. Such computer readable instructions may be executed within a processor, such as central processing unit (CPU) 91, to cause computing system 90 to do work. In many known workstations, servers, and personal computers, central processing unit 91 is implemented by a single-chip CPU called a microprocessor. In other machines, the central processing unit 91 may comprise multiple processors. Coprocessor 81 is an optional processor, distinct from main CPU 91, that performs additional functions or assists CPU 91. CPU 91 and/or coprocessor 81 may receive, generate, and process data related to the disclosed systems and methods for E2E M2M service layer sessions, such as receiving session credentials or authenticating based on session credentials.

In operation, CPU 91 fetches, decodes, and executes instructions, and transfers information to and from other resources via the computer's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memories coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 can be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode can access only memory mapped by its own process virtual address space; it cannot access memory within another process's virtual address space unless memory sharing between the processes has been set up.

In addition, computing system 90 may contain peripherals controller 83 responsible for communicating instructions from CPU 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may contain communication circuitry, such as for example a network adaptor 97, that may be used to connect computing system 90 to an external communications network, such as network 12 of Figure 37A and Figure 37B, to enable the computing system 90 to communicate with other nodes of the network.

It is understood that any or all of the systems, methods, and processes described herein may be embodied in the form of computer executable instructions (i.e., program code) stored on a computer-readable storage medium which instructions, when executed by a machine, such as a node of an M2M network, including for example an M2M server, gateway, device or the like, perform and/or implement the systems, methods and processes described herein. Specifically, any of the steps, operations or functions described above, including the operations of the gateway, UE, UE/GW, or any of the nodes of the mobile core network, service layer or network application provider, may be implemented in the form of such computer executable instructions. Logical entities such as such those illustrated in Figures 8-16 and 18-35 including device management servers, including DMGs and DMSs, as well as logical entities to produce the user interfaces such as GUI 3602 may be embodied in the form of the computer executable instructions stored on a computer-readable storage medium. Computer readable storage media include both volatile and nonvolatile, removable and non-removable media implemented in any non-transitory (i.e., tangible or physical) method or technology for storage of information, but such computer readable storage media do not includes signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible or physical medium which can be used to store the desired information and which can be accessed by a computer.

In describing preferred embodiments of the subject matter of the present disclosure, as illustrated in the Figures, specific terminology is employed for the sake of clarity. The claimed subject matter, however, is not intended to be limited to the specific terminology so selected, and it is to be understood that each specific element includes all technical equivalents that operate in a similar manner to accomplish a similar purpose.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have elements that do not differ from the literal language of the claims, or if they include equivalent elements with insubstantial differences from the literal language of the claims.

## Claims

1. A first device management server (DMG-1) in a service layer of an M2M network, the first device management server (DMG-1) comprising a processor and a memory, the first device management server (DMG-1) further including computer-executable instructions stored in the memory of the first device management server (DMG-1) which, when executed by the processor of the first device management server (DMG-1), cause the first device management server (DMG-1) to:
receive, from a second device management server (DMG-2) in the service layer of the M2M network, a delegation request message indicating a request to transfer authority to manage a client (DMC) from the second device management server (DMG-2) or from a third device management server (DMS-1) in a management layer of the M2M network, to the first device management server (DMG-1);
send, to the second device management server (DMG-2), a delegation response message indicating acceptance of the transfer of authority to manage the client (DMC);
establish a device management session with the client (DMC);
send, to the second device management server (DMG-2), a delegation complete message indicating that the transfer of authority from the second device management server (DMG-2) or the third device management server (DMS-1) to the first device management server (DMG-1) is complete.

2. The first device management server (DMG-1) recited in claim 1, wherein the third device management server (DMS-1) is a Device Management Server, DMS.

3. A first device management server (DMG-1) recited in claim 1, wherein the second device management server (DMG-2) is a Device Management, DMG.

4. The first device management server (DMG-1) recited in any of claims 1 to 3, wherein the first device management server (DMG-1) is a DMG.

5. The first device management server (DMG-1) recited in any of claims 1 to 4, wherein the delegation request message provides M2M network, M2M device or delegation related information.

6. The first device management server (DMG-1) recited in any of claims 1 to 5, further comprising sending, to the second device management server (DMG-2), a delegation setup indication message providing an indication of whether the client (DMC) has been bootstrapped.

7. The first device management server (DMG-1) recited in claim 6, further comprising receiving, from the second device management server (DMG-2), a delegation prepared messaged providing an indication that the client (DMC) preparation is complete.

8. The first device management server (DMG-1) recited in any of claim 1 to 7, further comprising sending a message to the third device management server (DMS-1) after the transfer of authority indicating delegation completion, transferring registration information, or transferring management information.

9. A first device management server (DMG-1) comprising a processor and a memory, the first device management server (DMG-1) further including computer-executable instructions stored in the memory of the first device management server (DMG-1) which, when executed by the processor of the first device management server (DMG-1), cause the first device management server (DMG-1) to:
prepare for a proposed transfer of authority to manage a client (DMC) from a second device management server (DMG-2) or a third device management server (DMS-1) to the first device management server (DMG-1) by receiving a message from the second device management server (DMG-2) or the third device management server (DMS-1), or sending a message to the second device management server (DMG-2) or the third device management server (DMS-1), the message providing at least one parameter related to the state of the M2M network or an M2M device, or related to a load on the respective device management server (DMG-1; DMG-2; DMS-1), wherein the first device management server (DMG-1) is in a service layer of the M2M network, wherein the second device management server (DMG-2) is in the service layer of the M2M network, and wherein the third device management server (DMS-1) is in a management layer of the M2M network, and
use the at least one parameter to determine whether to complete the proposed transfer of authority to manage the client (DMC) from the second device management server (DMG-2) or the third device management server (DMS-1) to the first device management server (DMG-1).

10. A client (DMC) in an M2M network, the client (DMC) comprising a processor and a memory, the client (DMC) further including computer-executable instructions stored in the memory of the client (DMC) which, when executed by the processor of the client (DMC), cause the client (DMC) to implement a device management client and to:
act under the control of a second device management server (DMG-2) in a service layer of the M2M network, or a third device management server (DMS-1) in a management layer of the M2M network; and
after a transfer of authority from the second device management server (DMG-2) or the third device management server (DMS-1) to the first device management server (DMG-1) recited in any of claims 1 to 8, act under the control of the first device management server (DMG-1).

## Patentansprüche

1. Erster Gerätemanagementserver bzw. Device-Managementserver (DMG-1) in einer Dienstschicht eines M2M-Netzes, wobei der Gerätemanagementserver (DMG-1) einen Prozessor und einen Arbeitsspeicher umfasst, der erste Gerätemanagementserver (DMG-1) ferner computerausführbare Anweisungen beinhaltet, die in dem Arbeitsspeicher des ersten Gerätemanagementservers (DMG-1) gespeichert sind, welche, wenn sie von dem Prozessor des ersten Gerätemanagementservers (DMG-1) ausgeführt werden, den ersten Gerätemanagementserver (DMG-1) zu Folgendem veranlassen:
Empfangen, von einem zweiten Gerätemanagementserver (DMG-2) in der Dienstschicht des M2M-Netzes, einer Delegationsanforderungsnachricht, die eine Anforderung anzeigt, Zuständigkeit zum Managen eines Clients (DMC), von dem zweiten Gerätemanagementserver (DMG-2) oder von einem dritten Gerätemanagementserver (DMS-1) in einer Managementschicht des M2M-Netzes an den ersten Gerätemanagementserver (DMG-1) zu übertragen;
Senden, an den zweiten Gerätemanagementserver (DMG-2), einer Delegationsantwortnachricht, die Akzeptanz der Übertragung der Zuständigkeit zum Managen des Clients (DMC) anzeigt;
Herstellen einer Gerätemanagementsitzung mit dem Client (DMC);
Senden, an den zweiten Gerätemanagementserver (DMG-2), einer Delegationsabschlussnachricht, die anzeigt, dass die Zuständigkeitsübertragung von dem zweiten Gerätemanagementserver (DMG-2) oder dem dritten Gerätemanagementserver (DMS-1) an den ersten Gerätemanagementserver (DMG-1) abgeschlossen ist.

2. Erster Gerätemanagementserver (DMG-1) nach Anspruch 1, wobei der dritte Gerätemanagementserver (DMS-1) ein Geräte-Management-Server bzw. Device Management Server, DMS, ist.

3. Erster Gerätemanagementserver (DMG-1) nach Anspruch 1, wobei der zweite Gerätemanagementserver (DMG-2) ein Geräte-Management bzw. Device Management, DMG, ist.

4. Erster Gerätemanagementserver (DMG-1) nach einem der Ansprüche 1 bis 3, wobei der erste Gerätemanagementserver (DMG-1) ein DMG ist.

5. Erster Gerätemanagementserver (DMG-1) nach einem der Ansprüche 1 bis 4, wobei die Delegationsanforderungsnachricht das M2M-Netz, das M2M-Gerät oder die Delegation betreffende Informationen bereitstellt.

6. Gerätemanagementserver (DMG-1) nach einem der Ansprüche 1 bis 5, ferner umfassend Senden, an den zweiten Gerätemanagementserver (DMG-2), einer Delegation-aufgesetzt-Anzeigenachricht, die eine Anzeige liefert, ob der Client (DMC) einem Bootstrap unterzogen wurde.

7. Erster Gerätemanagementserver (DMG-1) nach Anspruch 6, ferner umfassend Empfangen, von dem zweiten Gerätemanagementserver (DMG-2), einer Delegationvorbereitet-Nachricht, die eine Anzeige liefert, dass die Vorbereitung des Clients (DMC) abgeschlossen ist.

8. Erster Gerätemanagementserver (DMG-1) nach einem der Ansprüche 1 bis 7, ferner umfassend Senden einer Nachricht an den dritten Gerätemanagementserver (DMS-1), nach der Zuständigkeitsübertragung, die Delegationsabschluss anzeigt, Registrierungsinformationen überträgt oder Managementinformationen überträgt.

9. Erster Gerätemanagementserver (DMG-1), umfassend einen Prozessor und einen Arbeitsspeicher, wobei der erste Gerätemanagementserver (DMG-1) ferner computerausführbare Anweisungen beinhaltet, die in dem Arbeitsspeicher des ersten Gerätemanagementservers (DMG-1) gespeichert sind, welche, wenn sie von dem Prozessor des ersten Gerätemanagementservers (DMG-1) ausgeführt werden, den ersten Gerätemanagementserver (DMG-1) zu Folgendem veranlassen:
Vorbereiten für eine vorgeschlagene Übertragung von Zuständigkeit zum Managen eines Clients (DMC) von einem zweiten Gerätemanagementserver (DMG-2) oder von einem dritten Gerätemanagementserver (DMS-1) an den ersten Gerätemanagementserver (DMG-1) durch Empfangen einer Nachricht von dem zweiten Gerätemanagementserver (DMG-2) oder dem dritten Gerätemanagementserver (DMS-1), oder Senden einer Nachricht an den zweiten Gerätemanagementserver (DMG-2) oder den dritten Gerätemanagementserver (DMS-1), wobei die Nachricht mindestens einen Parameter bereitstellt, der den Zustand des M2M-Netzes oder eines M2M-Geräts betrifft, oder eine Belastung des jeweiligen Gerätemanagementservers (DMG-1; DMG-2; DMS-1) betrifft, wobei sich der erste Gerätemanagementserver (DMG-1) in einer Dienstschicht des M2M-Netzes befindet, wobei sich der zweite Gerätemanagementserver (DMG-2) in der Dienstschicht des M2M-Netzes befindet und wobei sich der dritte Gerätemanagementserver (DMS-1) in einer Managementschicht des M2M-Netzes befindet, und
Verwenden des mindestens einen Parameters zum Bestimmen, ob die vorgeschlagene Übertragung der Zuständigkeit zum Managen des Clients (DMC) von dem zweiten Gerätemanagementserver (DMG-2) oder dem dritten Gerätemanagementserver (DMS-1) an den ersten Gerätemanagementserver (DMG-1) abgeschlossen werden soll.

10. Client (DMC) in einem M2M-Netz, wobei der Client (DMC) einen Prozessor und einen Arbeitsspeicher umfasst, der Client (DMC) ferner computerausführbare Anweisungen beinhaltet, die in dem Arbeitsspeicher des Clients (DMC) gespeichert sind, welche, wenn sie durch den Prozessor des Clients (DMC) ausgeführt werden, den Client (DMC) zum Implementieren eines Gerätemanagementclients und zu Folgendem veranlassen:
Agieren unter der Kontrolle eines zweiten Gerätemanagementservers (DMG-2) in einer Dienstschicht des M2M-Netzes oder eines dritten Gerätemanagementservers (DMS-1) in einer Managementschicht des M2M-Netzes; und
nach der Zuständigkeitsübertragung von dem zweiten Gerätemanagementserver (DMG-2) oder dem dritten Gerätemanagementserver (DMS-1) an den ersten Gerätemanagementserver (DMG-1) nach einem der Ansprüche 1 bis 8, Agieren unter der Kontrolle des ersten Gerätemanagementservers (DMG-1).

## Revendications

1. Premier serveur de gestion de dispositif (DMG-1) dans une couche de service d'un réseau M2M, le premier serveur de gestion de dispositif (DMG-1) comprenant un processeur et une mémoire, le premier serveur de gestion de dispositif (DMG-1) incluant en outre des instructions exécutables par un ordinateur stockées dans la mémoire du premier serveur de gestion de dispositif (DMG-1) qui, lorsqu'elles sont exécutées par le processeur du premier serveur de gestion de dispositif (DMG-1), amènent le premier serveur de gestion de dispositif (DMG-1) à :
recevoir, en provenance d'un deuxième serveur de gestion de dispositif (DMG-2) dans la couche de service du réseau M2M, un message de requête de délégation indiquant une requête pour transférer l'autorité de gérer un client (DMC) à partir du deuxième serveur de gestion de dispositif (DMG-2) ou à partir d'un troisième serveur de gestion de dispositif (DMS-1) dans une couche de gestion du réseau M2M, au premier serveur de gestion de dispositif (DMG-1) ;
envoyer, au deuxième serveur de gestion de dispositif (DMG-2), un message de réponse de délégation indiquant l'acceptation du transfert d'autorité pour gérer le client (DMC) ;
établir une session de gestion de dispositif avec le client (DMC) ;
envoyer, au deuxième serveur de gestion de dispositif (DMG-2), un message d'achèvement de délégation indiquant que le transfert d'autorité à partir du deuxième serveur de gestion de dispositif (DMG-2) ou du troisième serveur de gestion de dispositif (DMS-1) au premier serveur de gestion de dispositif (DMG-1) est achevé.

2. Premier serveur de gestion de dispositif (DMG-1) énoncé dans la revendication 1, le troisième serveur de gestion de dispositif (DMS-1) étant un serveur de gestion de dispositif, DMS.

3. Premier serveur de gestion de dispositif (DMG-1) énoncé dans la revendication 1, le deuxième serveur de gestion de dispositif (DMG-2) étant une gestion de dispositif, DMG.

4. Premier serveur de gestion de dispositif (DMG-1) énoncé dans n'importe laquelle des revendications 1 à 3, le premier serveur de gestion de dispositif (DMG-1) étant un DMG.

5. Premier serveur de gestion de dispositif (DMG-1) énoncé dans n'importe laquelle des revendications 1 à 4, le message de requête de délégation fournissant des informations de réseau M2M, de dispositif M2M ou relatives à une délégation.

6. Premier serveur de gestion de dispositif (DMG-1) énoncé dans n'importe laquelle des revendications 1 à 5, comprenant en outre l'envoi, au deuxième serveur de gestion de dispositif (DMG-2), d'un message d'indication de configuration de délégation fournissant une indication du fait si le client (DMC) a été démarré.

7. Premier serveur de gestion de dispositif (DMG-1) énoncé dans la revendication 6, comprenant en outre la réception, en provenance du deuxième serveur de gestion de dispositif (DMG-2), d'un message de délégation préparée fournissant une indication du fait que la préparation du client (DMC) est achevée.

8. Premier serveur de gestion de dispositif (DMG-1) énoncé dans n'importe laquelle des revendications 1 à 7, comprenant en outre l'envoi d'un message au troisième serveur de gestion de dispositif (DMS-1) après le transfert d'autorité indiquant l'achèvement de délégation, transférant des informations d'enregistrement, ou transférant des informations de gestion.

9. Premier serveur de gestion de dispositif (DMG-1) comprenant un processeur et une mémoire, le premier serveur de gestion de dispositif (DMG-1) incluant en outre des instructions exécutables par un ordinateur stockées dans la mémoire du premier serveur de gestion de dispositif (DMG-1) qui, lorsqu'elles sont exécutées par le processeur du premier serveur de gestion de dispositif (DMG-1), amènent le premier serveur de gestion de dispositif (DMG-1) à :
se préparer pour un transfert d'autorité proposé pour gérer un client (DMC) à partir d'un deuxième serveur de gestion de dispositif (DMG-2) ou d'un troisième serveur de gestion de dispositif (DMS-1) au premier serveur de gestion de dispositif (DMG-1) grâce à la réception d'un message provenant du deuxième serveur de gestion de dispositif (DMG-2) ou du troisième serveur de gestion de dispositif (DMS-1), ou l'envoi d'un message au deuxième serveur de gestion de dispositif (DMG-2) ou au troisième serveur de gestion de dispositif (DMS-1), le message fournissant au moins un paramètre relatif à l'état du réseau M2M ou d'un dispositif M2M, ou relatif à une charge sur le serveur de gestion de dispositif respectif (DMG-1 ; DMG-2 ; DMS-1), le premier serveur de gestion de dispositif (DMG-1) étant dans une couche de service du réseau M2M, le deuxième serveur de gestion de dispositif (DMG-2) étant dans la couche de service du réseau M2M, et le troisième serveur de gestion de dispositif (DMS-1) étant dans une couche de gestion du réseau M2M, et
utiliser l'au moins un paramètre pour déterminer s'il convient d'achever le transfert d'autorité proposé pour gérer le client (DMC) à partir du deuxième serveur de gestion de dispositif (DMG-2) ou du troisième serveur de gestion de dispositif (DMS-1) au premier serveur de gestion de dispositif (DMG-1).

10. Client (DMC) dans un réseau M2M, le client (DMC) comprenant un processeur et une mémoire, le client (DMC) incluant en outre des instructions exécutables par un ordinateur stockées dans la mémoire du client (DMC) qui, lorsqu'elles sont exécutées par le processeur du client (DMC), amènent le client (DMC) à mettre en œuvre un client de gestion de dispositif et à :
agir sous le contrôle d'un deuxième serveur de gestion de dispositif (DMG-2) dans une couche de service du réseau M2M, ou d'un troisième serveur de gestion de dispositif (DMS-1) dans une couche de gestion du réseau M2M ; et
après un transfert d'autorité à partir du deuxième serveur de gestion de dispositif (DMG-2) ou du troisième serveur de gestion de dispositif (DMS-1) au premier serveur de gestion de dispositif (DMG-1) énoncé dans n'importe laquelle des revendications 1 à 8, agir sous le contrôle du premier serveur de gestion de dispositif (DMG-1).
